# EUROPEAN PATENT APPLICATION

(11) **EP 4 725 580 A1**
(43) Date of publication of application: **15.04.2026**
(21) Application number: 25186984.8
(22) Date of filing: 02.07.2025
(51) Int. Cl.: B01D 35/30

(54) **WATER FILTER**

(30) Priority: 08.10.2024 KR 20240136573
(71) Applicant: LG Electronics Inc., Yeongdeungpo-gu Seoul 07336 (KR)
(72) Inventor: KIM, Jongpil, 08592 Seoul (KR); LIM, Seonghee, 08592 Seoul (KR)
(74) Representative: Vossius & Partner Patentanwälte Rechtsanwälte mbB

(57) **Abstract**

The present disclosure relates to a water filter and a home appliance having the same, as a water filter according to an embodiment of the present disclosure, a water filter detachably coupled to a head connected to a water source includes a housing coupled to the head by rotation and having an upper opening formed therein that is open upward; a filter member accommodated inside the housing and for water purification; a filter cover shielding the upper opening and relatively rotated inside the housing; and a seal ring which seals the space between the housing and the filter cover, in which the filter cover may include a water inlet part into which water flows; a water outlet part from which water is discharged; and a sensing member protruding upward at a position corresponding to a filter sensing device provided in the head and is detected by the filter sensing device, and in which when the housing is rotated and coupled to the head, the water inlet part, the water outlet part, and the sensing member may move linearly upward inside the head.

## Description

### BACKGROUND

### 1. Field

The present disclosure relates to a water filter and a home appliance having the same.

### 2. Background

In general, filter devices are used to purify supplied water and can be used in home appliances such as water purifiers, ice makers, and refrigerators.

In addition, these filter devices require periodic replacement to maintain water purification performance, and can be configured to have an easy-to-replace structure so that the user can easily replace them at any time desired.

In general, the filter device may include a head provided on a flow path through which water flows, and a filter detachably coupled to the head and having a built-in filter member for purification. According to the type of the filter member, the filter device may have various purification performances, and the filter device may be configured by a coupling of a plurality of filters having different types of filter members.

Meanwhile, the filter device may have a structure that is convenient for mounting and separation, and in particular, various structures are being developed in which incorrect mounting is prevented and accurate mounting is induced by the coupled structure of the head and the filter.

In addition, a filter device is being developed that switches the internal flow path of the head by rotating the filter during the process of attaching and detaching the filter to the head, thereby preventing water leakage even when the filter is separated.

However, in such filter devices, there is a problem that the internal flow path structure of the head for switching the flow path is complicated. In addition, if the flow path is switched repeatedly, the durability of the head is reduced, and this causes a problem of water leakage.

The above references are incorporated by reference herein where appropriate for appropriate teachings of additional or alternative details, features and/or technical background.

### SUMMARY

An object of an embodiment of the present disclosure is to provide a water filter which can ensure the use of an authorized filter and a home appliance having the same.

An object of an embodiment of the present disclosure is to provide a water filter capable of determining water supply by sensing mounting of a filter and a home appliance having the same.

An object of an embodiment of the present disclosure is to provide a water filter capable of preventing water leakage when the filter is attached and detached and a home appliance having the same.

An object of an embodiment of the present disclosure is to provide a water filter which are easy to mount and maintain with a filter sensing device and a home appliance having the same.

As a water filter according to an embodiment of the present disclosure, a water filter detachably coupled to a head connected to a water source includes a housing coupled to the head by rotation and having an upper opening formed therein that is open upward; a filter member accommodated inside the housing and for water purification; a filter cover shielding the upper opening and relatively rotated inside the housing; and a seal ring which seals the space between the housing and the filter cover, in which the filter cover may include a water inlet part into which water flows; a water outlet part from which water is discharged; and a sensing member protruding upward at a position corresponding to a filter sensing device provided in the head and is detected by the filter sensing device, and in which when the housing is rotated and coupled to the head, the water inlet part, the water outlet part, and the sensing member may move linearly upward inside the head.

The sensing member may approach the filter sensing device according to the rotation of the housing.

The water inlet part and the water outlet part may protrude in the same direction as the sensing member.

The sensing member may be formed lower than the water inlet part and the water outlet part.

At least a part of the sensing member may be formed of a magnet, and the magnet may be disposed on the upper surface of the sensing member.

The water inlet part and the water outlet part may be spaced apart on the left and right sides, and the sensing member may be placed in the area between the water inlet part and the water outlet part.

A fastening groove may be formed on the upper surface of the filter cover, and a fastening part inserted into the fastening groove may be formed on the lower end of the sensing member, so that the sensing member is capable of attaching or detaching to or from the filter cover.

The sensing member may be formed of a magnetic material, and be mounted on the filter cover to form the same plane as the upper surface of the filter cover.

A water filter according an embodiment of the present disclosure includes a filter member for water purification; a housing accommodating the filter member and having an upper opening formed therein that is open upward; and a filter cover rotatably provided in the housing and shielding the upper opening, in which the filter cover may include a water inlet part protruding upwardly and into which water flows; a water outlet part protruding upwardly at a position spaced apart from the water inlet part and from which water is discharged; a rotation protrusion protruding upwardly and fixing the filter cover; and a sensing member protruding upwardly at a position spaced apart from the rotation protrusion and for detecting mounting, and in which the sensing member and the rotation protrusion may be disposed between the water inlet part and the water outlet part.

The extension line passing through the water inlet part and the water outlet part may intersect with the extension line passing through the rotation protrusion and the sensing member.

A pair of guide protrusions for attaching or detaching the water filter may be formed on the outer surface of the housing, and the pair of guide protrusions may be disposed to face each other.

The water inlet part and the water outlet part may be disposed between the pair of guide protrusions, and be disposed on the same extension line as the pair of guide protrusions.

The pair of guide protrusions may be positioned on the same extension line as the water inlet part and the water outlet part before the mounting of the water filter and be positioned on the same extension line as the rotation protrusion and the sensing member when the housing is rotated and the water filter is mounted.

The water inlet part, the water outlet part, the rotation protrusion and the sensing member may be formed lower than the upper end of the housing.

The water inlet part and the water outlet part may be spaced apart in the left and right direction based on the center of the filter cover between the pair of guide protrusions, and the rotation protrusion and the sensing member may be spaced apart in the front and rear direction based on the center of the filter cover.

The water inlet part and the water outlet part may have an elliptical cross-sectional shape when viewed from above, and a major axis of the water inlet part and a major axis of the water outlet part may be disposed in a staggered direction to each other.

In addition, a home appliance in which a water filter is provided according to an embodiment of the present disclosure includes a cabinet; a head provided in the cabinet and connected to a water supply source; and a water filter attached or detached to or from the head, in which the water filter may include a filter member for water purification; a housing accommodating the filter member and rotatably coupled to the head; and a filter cover provided to rotate relative to the housing inside the housing and having a water inlet part and a water outlet part through which water flows in and out and which are formed to protrude upward; and in which the filter cover may be provided with a sensing member that protrudes upward, the head may be provided with a filter sensing device that senses the sensing member when the filter is mounted, and when the housing is rotated and coupled with the head, the water inlet part, the water outlet part, and the sensing member may move linearly upward inside the head.

At least a part of the sensing member may be formed of a magnet, and the sensing member may be configured as a Hall sensor that senses a change in a magnetic field.

The head may include a head body having a lower surface that is opened so that the housing is coupled; and a head inner coupled through the opened lower surface of the head body, and the filter sensing device may be disposed between the head body and the head inner.

An inlet hole into which the water inlet part is inserted; an outlet hole into which the outlet part is inserted; and a sensing hole into which the sensing member is inserted may be provided in the lower surface of the head inner, and the filter sensing device may be provided at a position corresponding to the sensing hole.

The filter sensing device may include a sensing part disposed facing the sensing member, and the sensing part may be positioned higher than the sensing hole.

The sensing member may be injection-molded in a shape corresponding to the sensing hole, and on an upper surface of the sensing member, an accommodation part opening upward may be formed into which a magnet is inserted.

A sensing device mounting part may be formed that is opened downwards on the head body, and the filter sensing device is inserted through the opening, and the head inner may support the filter sensing device inserted into the sensing device mounting part from below.

A guide protrusion coupled with the head may be provided around the circumference of the housing, and the guide protrusion may be inserted into the space between the inner surface of the head body and the head inner.

The home appliance may further include a water supply flow path connecting the water source and the head, in which a water supply valve may be provided in the water supply flow path, the water supply valve may be opened when the sensing member is detected by the filter sensing device, and closed when the sensing member is not detected by the filter sensing device.

A filter non-sensing state may be output through at least one of a display, a speaker, and a remote device when the sensing member is not detected by the filter sensing device.

### BRIEF DESCRIPTION OF THE DRAWINGS

The embodiments will be described in detail with reference to the following drawings in which like reference numerals refer to like elements wherein:
FIG. 1 is a front view illustrating a refrigerator according to the first embodiment of the present disclosure;
FIG. 2 is a view illustrating the flow path structure for supplying water to the refrigerator;
FIG. 3 is a perspective view illustrating a state where a filter according to a first embodiment of the present disclosure is coupled to a head;
FIG. 4 is an exploded perspective view illustrating a state where the filter is separated from the head;
FIG. 5 is an exploded perspective view illustrating a state where the head is exploded as seen from above;
FIG. 6 is a perspective view illustrating the head seen from below,
FIG. 7 is a perspective view illustrating the head seen from the rear;
FIG. 8 is a bottom view illustrating the head;
FIG. 9 is a cross-sectional view taken along line 9-9 of FIG. 4;
FIG. 10 is a perspective view taken along line 10-10 of Figure 3;
FIG. 11 is an exploded perspective view illustrating a valve, which is a component of the head;
FIG. 12 is a perspective view taken along line 12-12 of FIG. 3;
FIG. 13 is an exploded perspective view illustrating a state where the head is exploded as seen from below,
FIG. 14 is a cut-away exploded perspective view illustrating the head;
FIG. 15 is a perspective view taken along line 15-15 of FIG. 4;
FIG. 16 is an exploded perspective view illustrating the filter;
FIG. 17 is a plan view illustrating the filter;
FIG. 18 is a side view illustrating the upper part of the filter as seen from one side;
FIG. 19 is a side view illustrating the upper part of the filter as seen from the other side;
FIG. 20 is a perspective view taken along line 20-20 of FIG. 16;
FIG. 21 is a perspective view illustrating the filter cover of the filter as seen from above;
FIG. 22 is a side view illustrating the filter cover;
FIG. 23 is a perspective view taken along line 23-23 of FIG. 21;
FIG. 24 is a perspective view taken along line 24-24 of FIG. 21;
FIG. 25 is a perspective view taken along line 25-25 of FIG. 4;
FIG. 26 is a longitudinal cross-sectional view illustrating a state where the upper housing and filter cover are combined;
FIG. 27 is an enlarged view illustrating part A of FIG. 26;
FIG. 28 is a perspective view taken along line 28-28 of FIG. 4;
FIG. 29 is an exploded perspective view illustrating a state of being aligned for coupling the filters as seen from one side;
FIG. 30 is an exploded perspective view illustrating a state of being aligned for coupling the filters as seen from the other side;
FIG. 31 is a longitudinal cross-sectional view illustrating a state where the head and filter are separated;
FIG. 32 is a view illustrating a state where the filter has started to be inserted into the head;
FIG. 33 is a cross-sectional view taken along line 33-33 of FIG. 32;
FIG. 34 is a cross-sectional view illustrating the disposition of the sensing device and sensing member when the filter is started to be inserted into the head;
FIG. 35 is a view illustrating a state where the filter inserted into the head and rotated at a set angle;
FIG. 36 is a cross-sectional view taken along line 36-36 of FIG. 35;
FIG. 37 is a front view illustrating a state where the filter is completely coupled to the head;
FIG. 38 is a rear view illustrating a state where the filter is completely coupled to the head;
FIG. 39 is a longitudinal cross-sectional view of FIG. 37;
FIG. 40 is a cross-sectional view illustrating the disposition of the sensing device and sensing member in a state where the filter is completely inserted into the head;
FIG. 41 is a view illustrating the water flow in a state where the filter is completely coupled to the head;
FIG. 42 is a cross-sectional view illustrating a state where the water inlet part and the water outlet part are connected when the filter is completely coupled to the head;
FIG. 43 is a block diagram illustrating the control signal flow of a home appliance according to an embodiment of the present disclosure;
FIG. 44 is a flowchart illustrating a control method according to whether the filter of the home appliance is recognized;

### DETAILED DESCRIPTION

Hereinafter, specific embodiments of the present disclosure will be described in detail with reference to the drawings. However, the present disclosure is not limited to the embodiments in which the idea of the present disclosure is presented, and other regressive disclosures or other embodiments included within the scope of the idea of the present disclosure can be easily proposed by adding, changing, deleting, or the like other components.

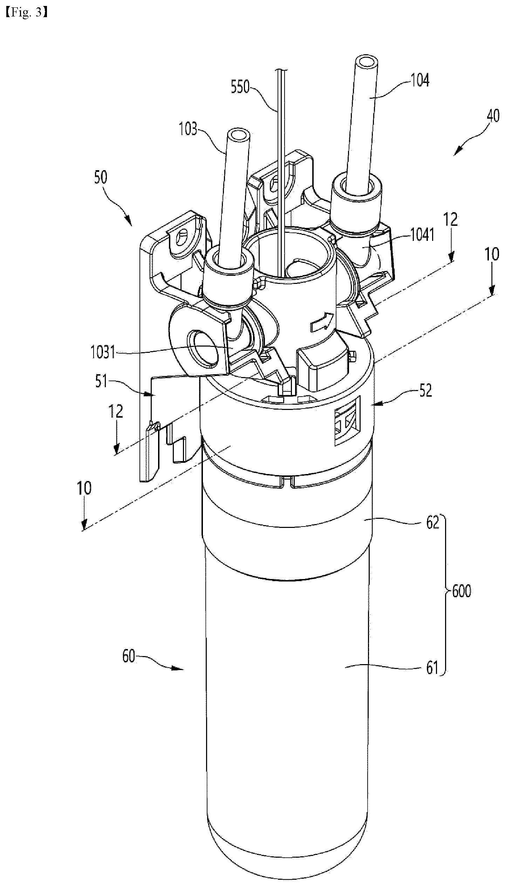

Before the explanation, the direction is defined. In the embodiment of the present disclosure, the direction toward the head in FIG. 3 may be referred to as an upper direction, the direction toward the filter may be referred to as a lower direction, the direction toward the mounting member may be referred to as a rear direction, and the direction away from the mounting member may be referred to as a front direction. In addition, the direction toward the center of the filter and the head may be referred to as an inner direction, and the direction away from the center may be referred to as an outer direction.

In addition, although the embodiment of the present disclosure has been described using a refrigerator as an example among many home appliances, it should be noted in advance that the filter according to the embodiment of the present disclosure can be applied to various home appliances requiring purified water, such as water purifiers and ice makers, without being limited in structure and shape.

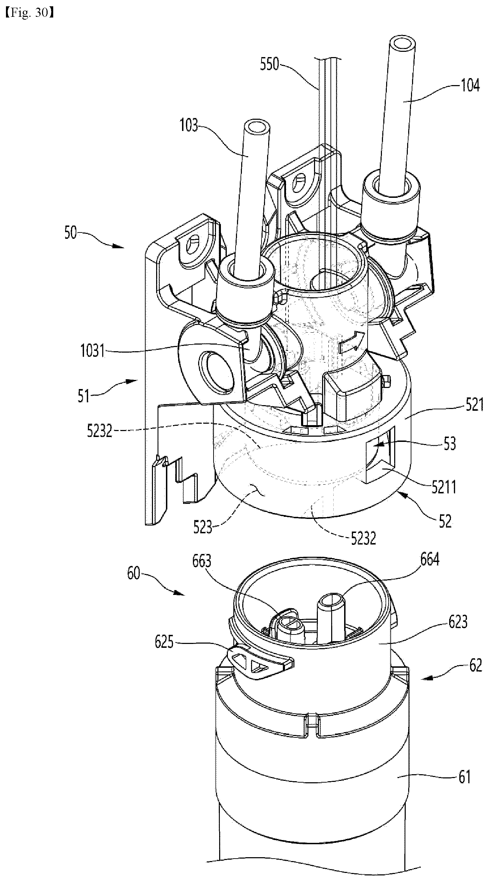

To readily understand the following detailed and expansive description, a brief explanation is provided relative to FIGS. 30-33. As shown, to insert a filter 60 into a head 50, at least an upper housing 62 is rotated into the head 50 while the filter cover 66 having water inlet 663 and water outlet 664 is moved linearly. In other words, at least the upper housing 62 is rotatable around the filter cover 66. If the lower housing 61 is fixed to the upper housing, the housing 600 is rotatable relative to the filter cover as the filter 60 is inserted into the head 50. Further, if the filter member 63 is maintained stationary with the filter cover 66, the housing 600 rotates relative to the filter cover 66 and the filter member 63.

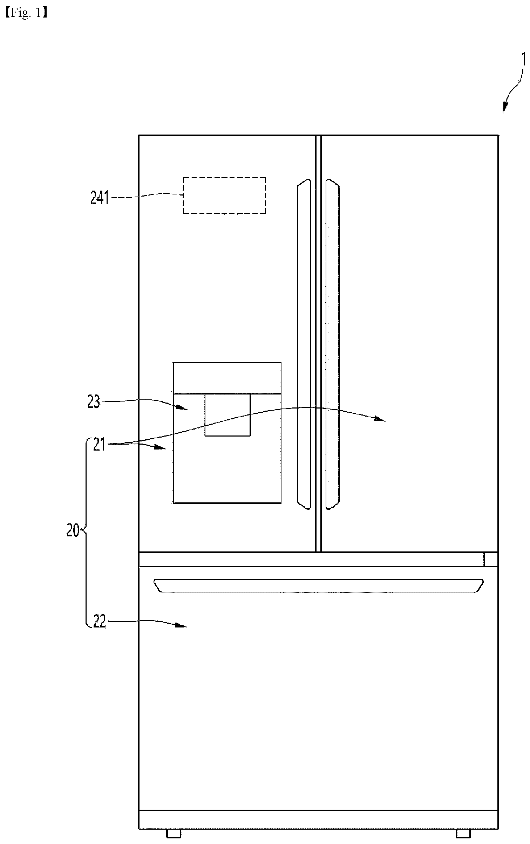

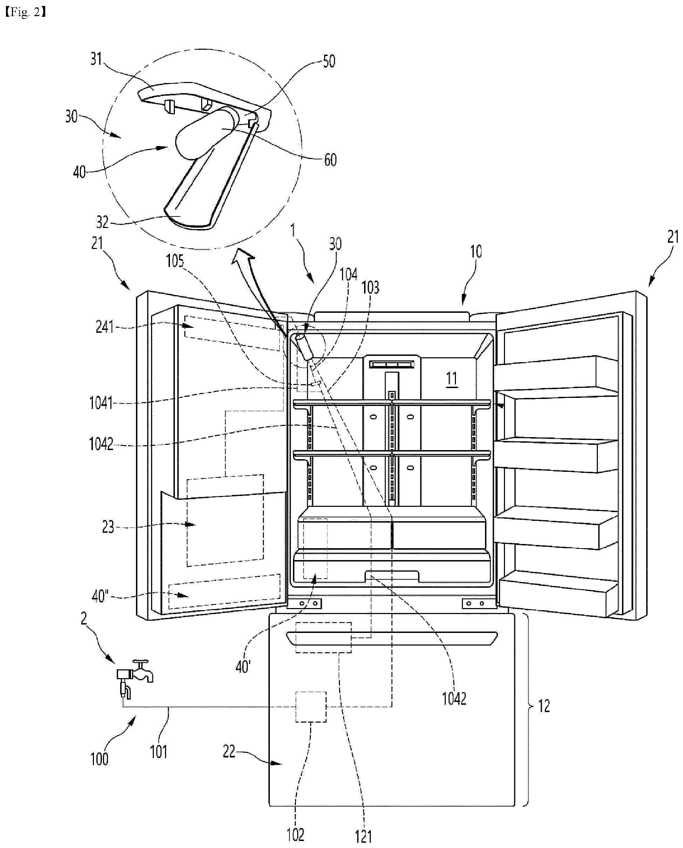

FIG. 1 is a front view illustrating a refrigerator according to the first embodiment of the present disclosure, and FIG. 2 is a view illustrating the flow path structure for supplying water to the refrigerator.

As illustrated, a refrigerator 1 according to an embodiment of the present disclosure may have an outer appearance formed by a cabinet 10 forming a storage space and a door 20 for opening and closing the storage space of the cabinet 10.

The storage space may include a refrigerating compartment 11 positioned at the upper part of the cabinet 10 and a freezing compartment 12 positioned at the lower part of the cabinet 10.

The door 20 may include a refrigerating compartment door 21 and a freezing chamber door 22 that independently open and close the refrigerating compartment 12 and freezing compartment 13, respectively. The refrigerating compartment doors 21 may be provided in pairs on the left and right sides, and may be configured to open and close the refrigerating compartment 11 by rotation.

In addition, the freezing chamber door 22 may have a structure like a drawer and may be configured to open and close the freezing compartment 12 by being pulled in and out.

According to the disposition of the storage space and the type and shape of the refrigerator that opens and closes the storage space, an embodiment of the present disclosure may have various structures, and for convenience of explanation and understanding, the embodiment of the present disclosure will be described based on a refrigerator in which the refrigerating compartment is disposed above the freezing compartment and is opened and closed by a pair of doors.

A dispenser 23 and an ice maker 241 may be provided on one of the pair of refrigerating compartment doors 21. The ice maker 241 may be provided inside the refrigerating compartment 11 or in the freezing compartment 12 rather than on the refrigerator door.

The dispenser 23 is provided on the front surface of the refrigerating compartment door 21 and can be configured to allow a user to operate it from the outside to dispense water or ice. In addition, an ice making compartment 24 is provided above the dispenser 23. The ice making compartment 24 is an insulated space where ice is made and stored, and the ice maker 241 is accommodated inside thereof and can be configured to be opened and closed by a separate door.

In addition, an ice maker 121 may be provided inside the freezing compartment 12. When the freezing compartment door 12 is opened, access to the ice maker 121 is possible, and ice made in the ice maker 121 can be taken out.

In order to distinguish the ice maker 121 provided in the freezing compartment 12 from the ice maker 241 provided in the refrigerating compartment door 21, the ice maker 241 provided in the refrigerating compartment 11 may be referred to as a first ice maker 241, and the ice maker 121 provided in the freezing compartment 12 may be referred to as a second ice maker 121.

The refrigerator 1 may be equipped with a filter assembly 40 for purifying water supplied from an external water supply source 2. For example, the water supply source 2 may be a tap water source. In addition, the water supply source 2 may be a container storing water, such as a water tank.

The filter assembly 40 can be connected to a water device that uses purified water. The water device can include an ice maker that makes ice, a dispenser that dispenses purified water, or the like. In addition, the water device and filter assembly 40 can be used in other home appliances such as a water purifier rather than a refrigerator.

For example, water supplied from the water supply source 2 may be purified by the filter assembly 40 and then dispensed to the dispenser 23 or supplied to the ice maker 241, 121. In addition, the water supply source 2, the filter assembly 40, the dispenser 23, and the ice maker 241, 121 may be connected by a water supply flow path 100.

In detail, the water supply flow path 100 may include a connection pipe 101 connected to the water supply source 2 and a water supply valve 102 inside the cabinet 10. For example, the water supply valve 102 may be provided inside a machine room where a compressor and a condenser are disposed. In addition, the water supply valve 102 may be provided with a flow rate sensor to adjust and control the flow rate of water supplied to the refrigerator 1.

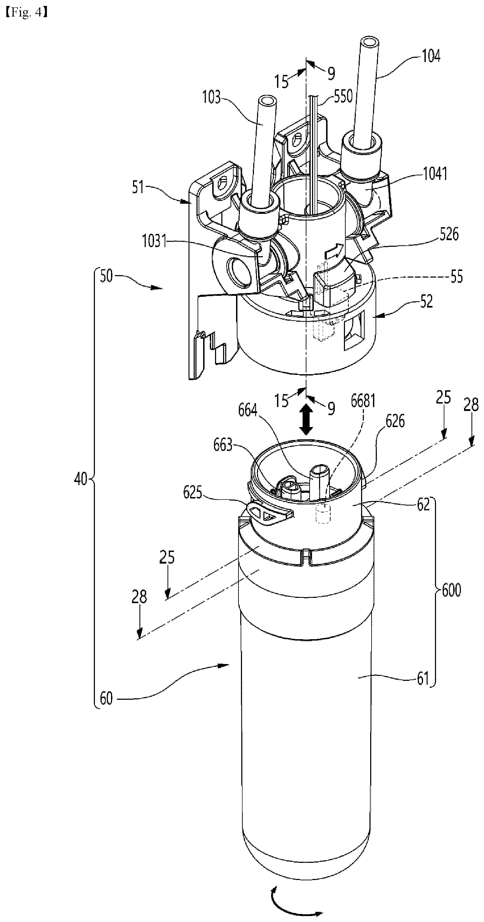

Meanwhile, the operation of the water supply valve 102 can be determined by a filter sensing device 55 (in FIG. 4) to be described below. In other words, the water supply valve 102 is turned on by sensing a magnet 6681 (in FIG. 4) mounted on the filter 60 when the filter 60 is mounted, and is turned off when the filter 60 is separated, thereby fundamentally preventing water leakage when the filter 60 is not mounted or is incorrectly mounted.

The water supply valve 102 can be placed at different locations in the refrigerator 1 as needed. In addition, the water supply valve 102 can be placed at various different locations on the water supply flow path 100 connected to the filter assembly 40, and the location can be determined according to the structure of the applied home appliance.

The water supply flow path 100 may include a water inlet pipe 103 and a water outlet pipe 104. The water inlet pipe 103 may be configured to connect the water supply valve 102 and the filter assembly 40 to supply water to the filter assembly 40. The water outlet pipe 104 may be connected to the filter assembly 40 and the dispenser 23 or the ice maker 241, 121 to supply purified water. The water inlet pipe 103 and the water outlet pipe 104 may be configured by connecting a plurality of pipes by fittings.

In addition, the water outlet pipe 104 may be branched by a branch valve 105. For example, the water outlet pipe 104 may include a first water outlet pipe 1041 that supplies purified water to the dispenser 23 and the first ice maker 141, and a second water outlet pipe 1042 that supplies purified water to the second ice maker 121.

Meanwhile, the filter assembly 40 may be provided in the refrigerating compartment 11. For example, the filter assembly 40 may be provided at a corner of one of the left and right sides of the upper surface of the refrigerating compartment 11. As another example, the filter assembly 40' may be provided between storage members such as drawers or shelves of the refrigerating compartment 11 or at a rear part covered by the storage members. As another example, the filter assembly 40" may be provided in the refrigerating compartment door 21.

Meanwhile, the filter assembly 40 may be configured to facilitate replacement of the filter 60 in which substantial water purification is performed. For example, the refrigerating compartment 11 may be equipped with a filter device 30. The filter device 30 may be configured to be accessible when the refrigerating compartment door 21 is opened.

The filter device 30 may include a case 31 and a cover 32. The case 31 may be provided on the upper surface of the cabinet 10. In addition, the case 31 may form a space in which a filter assembly 40 is disposed inside. The cover 32 may open and close the case 31 by rotation. The filter assembly 40 may be exposed to the outside by opening the cover 32. The filter assembly 40 may include a filter 60 and a head 50. In addition, when the cover 32 is opened, the filter 60 may be exposed forward to be easily detachable. The filter 60 may be referred to as a water filter for water purification, and will be referred to as a filter hereinafter for convenience of explanation.

Below, the structure of the filter assembly 40 is described in more detail with reference to the drawings.

FIG. 3 is a perspective view illustrating a state where a filter according to a first embodiment of the present disclosure is coupled to a head, and FIG. 4 is an exploded perspective view illustrating a state where the filter is separated from the head.

As illustrated, the filter assembly 40 may include a head 50 for mounting the filter assembly 40 and a filter 60 detachably mounted on the head 50.

For example, the head 50 may include a mounting member 51 and a head body 52. The mounting member 51 is for mounting the filter assembly 40, and a fixing member such as a screw may be fastened to fix the filter assembly 40 to a target location. For example, the mounting member 51 may be fixed to one side of the refrigerating compartment 11. Meanwhile, when a structure for mounting the head 50 is provided in the refrigerator 1, the mounting member 51 may be omitted, and the head 50 may be configured with the head body 52. In other words, the head body 52 may mean the head 50.

In addition, the head body 52 can be rotatably mounted on the mounting member 51. The head body 52 can be rotated with respect to the mounting member 51 while the filter 60 is mounted, thereby making it easier to attach or detach the filter 60.

The water inlet pipe 103 and the water outlet pipe 104 may be connected to both sides of the head body 52. The water inlet pipe 103 and the water outlet pipe 104 may be connected to the head body 52 by a water inlet pipe fitting 1031 and a water outlet pipe fitting 1041, respectively. Accordingly, water flowing in through the water inlet pipe fitting 1031 from the water inlet pipe 103 may pass through the head body 52 and be supplied to the filter 60, and water purified in the filter 60 may pass through the head body 52 and be discharged to the water outlet pipe 104 through the water outlet pipe fitting 1041.

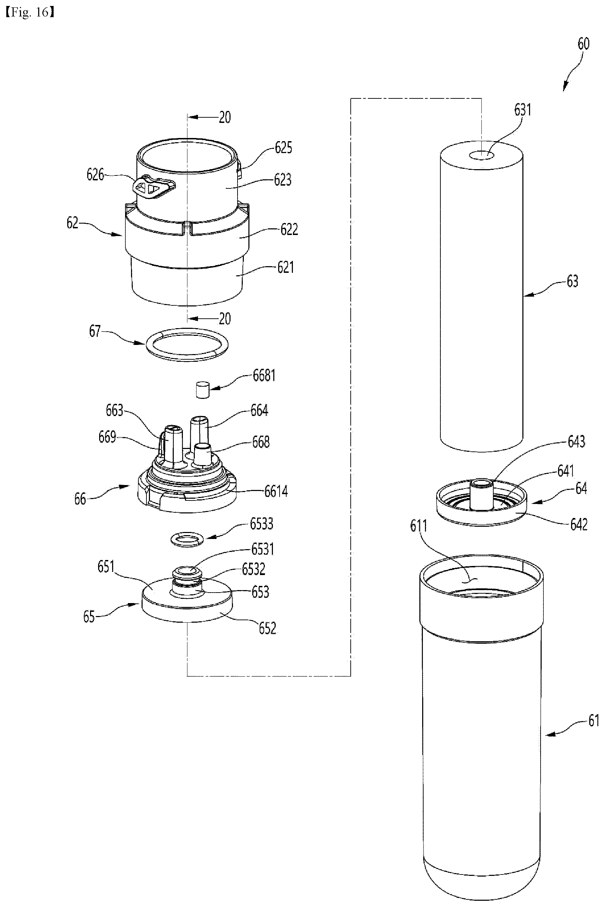

The filter 60 may include a housing 600 forming an outer appearance. In addition, the housing 600 may be detachably mounted on the head body 52. In addition, the housing 600 may accommodate a filter member 63 (in FIG. 16) for purified water inside. For example, the housing 600 may include an upper housing 62 and a lower housing 61, and the filter member 63 may be accommodated inside the upper housing 62 and the lower housing 61.

The upper end of the filter 60 can be inserted into the opened lower surface of the head 50 and coupled with the head 50. For example, a guide protrusion 625, 626 for coupling with the head 50 may be formed on the outer surface of the upper housing 62. The upper housing 62 is inserted into the interior of the head body 52, and the guide protrusion 625, 626 can be moved while rotating along the inner surface of the head body 52. In other words, the housing 600 can be rotated during the process of being inserted and mounted into the head body 52.

The upper housing 62 may have a water inlet part 663 and a water outlet part 664 protruding upward. In addition, when the filter 60 is connected to the head 50, the water inlet part 663 and the water outlet part 664 may communicate with the flow path of the head 50. Accordingly, water supplied through the water inlet pipe 103 may be purified through the filter 60 and then discharged through the water outlet pipe 104.

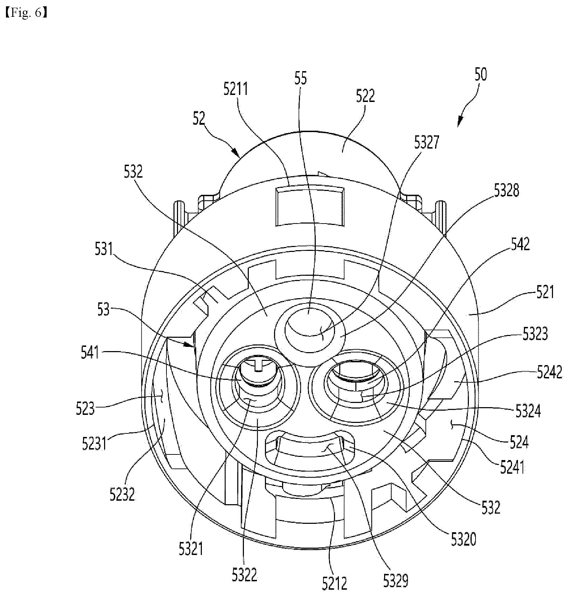

The water inlet part 663 and water outlet part 664 maintain an aligned state even when the housing 600 rotates, and can be connected to the head 50. In other words, when the filter 60 is mounted, the water inlet part 663 and water outlet part 664 move upward and are inserted into the corresponding inlet hole 5321 (in FIG. 6) and outlet hole 5323 (in FIG. 6) on the inside of the head 50, and the housing 600 can be coupled to the head 50 while rotating independently of the water inlet part 663 and water outlet part 664.

Below, the head 50 will be described in more detail with reference to the drawings.

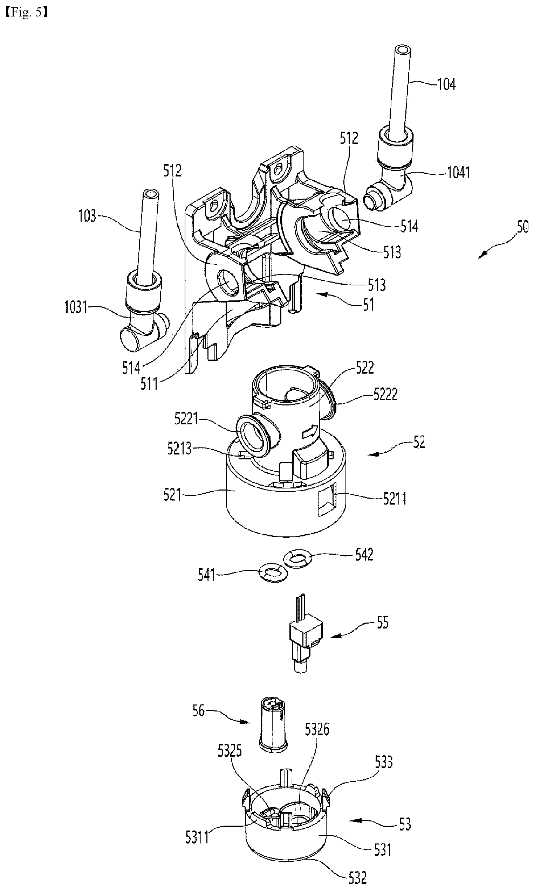

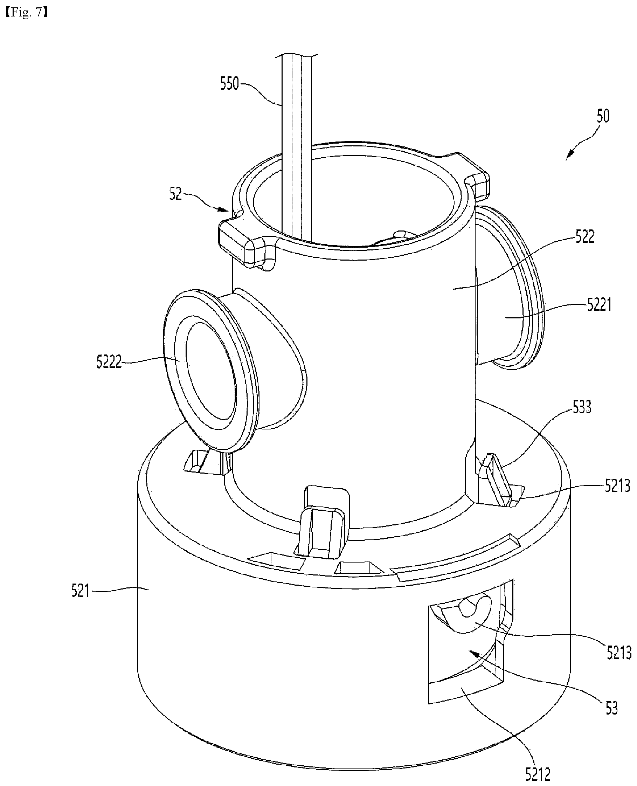

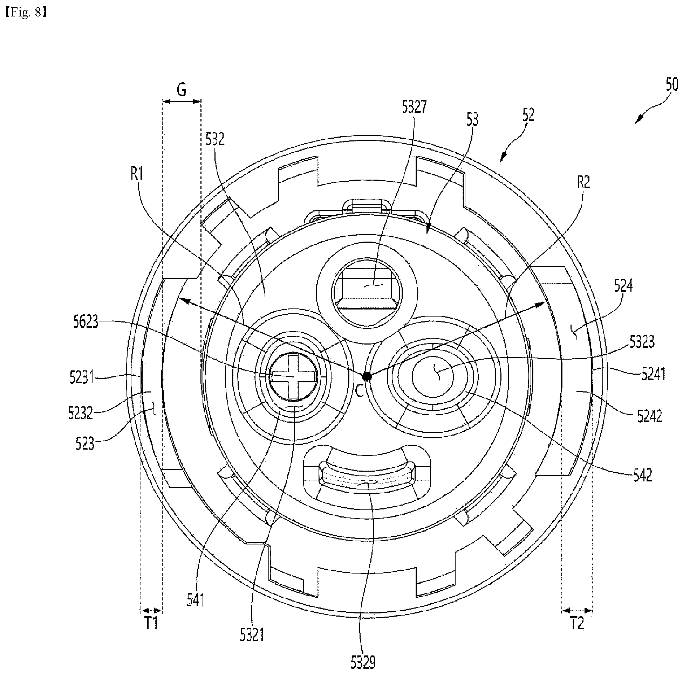

FIG. 5 is an exploded perspective view illustrating a state where the head is exploded as seen from above, FIG. 6 is a perspective view illustrating the head seen from below, FIG. 7 is a perspective view illustrating the head seen from the rear, and FIG. 8 is a bottom view illustrating the head.

As illustrated, the head 50 may include the mounting member 51, the water inlet pipe 103, the water outlet pipe 104, and the head body 52.

The mounting member 51 is for mounting the filter assembly 40, and the head body 52 on which the filter 60 is mounted can be rotatably mounted. In detail, the mounting member 51 can include a mounting part 511 that comes into contact with a mounting target, and a head connection part 512 to which the head body 52 is rotatably coupled.

The mounting part 511 forms the rear surface of the mounting member 51 and can extend in the vertical direction. In addition, a screw can be fastened to the mounting part 511 to secure the mounting member 51.

The head connection part 512 may protrude forward from both left and right sides of the mounting part 511. The head body 52 may be placed between a pair of the head connection parts 512. In detail, a fitting seating part 513 on which the fitting 1031, 1041 is seated may be formed at the front end of the head connection part 512. In addition, a seating part opening 514 on which the fitting 1031, 1041 is axially coupled may be formed at the side of the fitting seating part 513.

The water inlet pipe fitting 1031 and the water outlet pipe fitting 1041 are respectively seated in the fitting mounting parts 513 located on both sides, and can be rotatably disposed by being axially coupled to the seating part openings 514. In addition, the water inlet pipe fitting 1031 and the water outlet pipe fitting 1041 can be rotatably connected to both sides of the head body 52. Therefore, in a state where the head body 52 and the fittings 1031, 1041 are mounted on the head connection part 512, the head body 52 and the fittings 1031, 1041 can be rotated with respect to the head connection part 512.

The head body 52 can be formed in a cylindrical shape to which the filter 60 is connected through the opened lower surface. In addition, the water inlet pipe 103 and the water outlet pipe 104 can be connected to both sides of the head body 52.

In detail, the head body 52 may include a head upper 522 and a head lower 521. The head upper 522 may be connected to the water inlet pipe fitting 1031 and the water outlet pipe fitting 1041. A water inlet pipe connection part 5221 connected to the water inlet pipe fitting 1031 and a water outlet pipe connection part 5222 connected to the water outlet pipe fitting 1041 may be provided on both sides of the head upper 522.

The water inlet pipe connection part 5221 and water outlet pipe connection part 5222 can be opened on both sides of the head upper. In addition, the end parts of the water inlet pipe fitting 1031 and the water outlet pipe fitting 1041 can be rotatably inserted into the water inlet pipe connection part 5221 and the water outlet pipe connection part 5222.

In addition, the water inlet pipe connection part 5221 and the water outlet pipe connection part 5222 may be disposed to face each other on the same extension line. The water inlet pipe connection part 5221 and the water outlet pipe connection part 5222 may protrude outwardly from the outer surface of the head upper 522 and may be rotatably coupled to the head connection part 512. In addition, the water inlet pipe connection part 5221 and the water inlet pipe fitting 1031, the water outlet pipe connection part 5222 and the water outlet pipe fitting 1041 may be formed integrally, and the water inlet pipe 103 and the water outlet pipe 104 may be directly connected to the water inlet pipe connection part 5221 and the water outlet pipe connection part 5222.

The head lower 521 is provided at the lower part of the head upper 522 and may form a coupling space 520 that is coupled to the upper end of the filter 60. The coupling space 520 may be opened downward. In addition, the head lower 521 may be formed to have a larger diameter than the head upper 522. In addition, a check window 5211 that can visualize the exact mounting state of the filter 60 may be opened in the head lower 521. In addition, a rear check window 5212 may be further formed at the rear of the head lower 521 facing the check window 5211. The check window 5211 may also be referred to as a front check window 5211 to distinguish it from the rear check window 5212.

The head lower 521 has an open lower surface and can form an coupling space 250 in which the upper end of the filter 60 is accommodated. In addition, a coupling guide 523, 524 is formed on the inner surface of the head lower 521 to induce insertion and coupling of the filter 60.

For example, the coupling guide 523, 524 may include a first guide 523 and a second guide 524. The first guide 523 may be formed to guide the insertion and coupling of the first guide protrusion 625 formed on the filter 60, and the second guide 524 may be formed to guide the insertion and coupling of the second guide protrusion 626 formed on the filter 60.

In detail, the first guide 523 and the second guide 524 can be formed at positions facing each other. In addition, the first guide 523 and the second guide 524 can be disposed in the same direction as the disposition direction of the water inlet pipe connection part 5221 and the water outlet pipe connection part 5222.

The first guide 523 is recessed into the inner surface of the head lower 521 and can extend upward from the lower end of the head lower 521. The first guide 523 can extend to the check window 5211 to guide the first guide protrusion 625 to move along the first guide 523 to the check window 5211.

The first guide 523 may include a first guide hole 5231 opened at the lower end of the head lower 521. The position of the first guide hole 5231 may be positioned downward corresponding to the water inlet pipe connection part 5221. The size of the first guide hole 5231 may be formed to correspond to the size of the first guide protrusion 625, so that the first guide protrusion 625 may be inserted through the first guide hole 5231.

In addition, the first guide 523 may include a first guide part 5232 extending from one end of the first guide hole 5231 toward the check window 5211. The first guide part 5232 may be formed to be inclined or rounded, and may be in contact with the first guide protrusion 625. Accordingly, the first guide protrusion 625 inserted into the first guide hole 5231 may be guided to move toward the rear check window 5212 while maintaining contact with the first guide part 5232. In addition, the first guide parts 5232 may be formed in a pair at both ends of the first guide hole 5231, and the first guide protrusion 625 may be positioned between the pair of first guide parts 5232.

At this time, the first guide part 5232 may be formed along the inner circumference of the head lower 521. In addition, the first guide protrusion 625 moves along the inner surface of the head lower 521. Accordingly, the filter housing 600 may rotate while the first guide protrusion 625 moves from the first guide hole 5231 to the check window 5211.

The second guide 524 is recessed into the inner surface of the head lower 521 and can extend upward from the lower end of the head lower 521. The second guide 524 can extend to the rear check window 5212 and guide the second guide protrusion 626 to move along the second guide 524 to the rear check window 5212.

The second guide 524 may be formed at a position facing the first guide 523. In addition, the second guide 524 may be formed in a shape corresponding to the first guide 523, but may be formed to extend in a direction opposite to the extension direction of the second guide 524.

The second guide 524 may include a second guide hole 5241 opened at the lower end of the head lower 521. The position of the second guide hole 5241 may be positioned downward corresponding to the water outlet pipe connection part 5222. In addition, the second guide hole 5241 may be formed in a direction facing the first guide hole 5231. The size of the second guide hole 5241 may be formed corresponding to the size of the second guide protrusion 626, so that the second guide protrusion 626 may be inserted through the second guide hole 5241.

In addition, the second guide 524 may include a second guide part 5242 extending from one end of the second guide hole 5241 toward the rear check window 5212. The second guide part 5242 may be formed to be inclined or rounded, and may be in contact with the second guide protrusion 626. Accordingly, the second guide protrusion 626 inserted into the second guide hole 5241 may be guided to move toward the check window 5211 while maintaining contact with the second guide part 5242. In addition, a pair of the second guide parts 5242 may be formed at both ends of the second guide hole 5241, and the second guide protrusion 626 may be positioned between the pair of second guide parts 5242.

At this time, the first guide part 5232 may be formed along the inner circumference of the head lower 521. In addition, the second guide protrusion 626 moves along the inner surface of the head lower 521. Accordingly, the filter housing 600 may rotate while the second guide protrusion 626 moves from the second guide hole 5241 to the rear check window 5212.

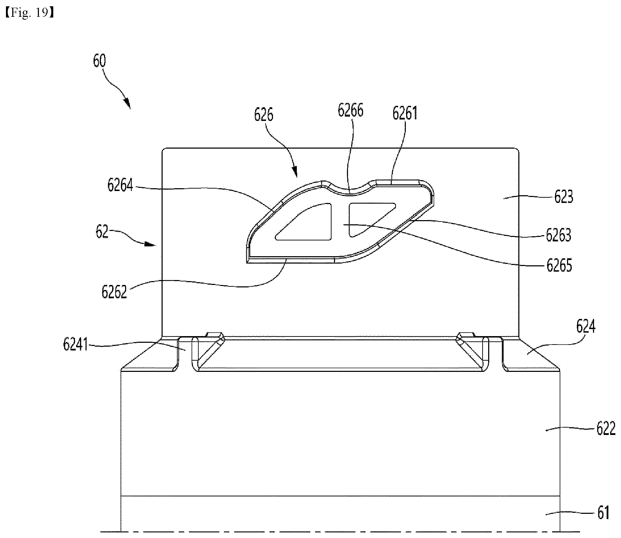

In addition, a restraint part 5213 protruding downwardly may be formed on the upper end of the rear check window 5212. The restraint part 5213 may protrude downwardly and may be formed in an elastic ring shape. Accordingly, it may be checked through the rear check window 5212 that the restraint part 5213 is inserted into the restraint groove 6256 (in FIG. 19) formed on the upper surface of the second guide protrusion 626. In addition, the moment the restraint part 5213 is inserted into the restraint groove 6266, the elastic deformation of the restraint part 5213 and the operational feeling due to the coupling with the restraint groove 6266 are transmitted to the user, so that the user can recognize that the filter 60 is completely mounted.

Meanwhile, a head inner 53 may be provided inside the head body 52. The head inner 53 may be separately molded and coupled to the head body 52. The head inner 53 may be exposed through the opened lower surface of the head body 52. In addition, the head inner 53 may be formed into a circular shape concentric with the head body 52 when viewed from below.

The head inner 53 may be formed to be coupled with the water inlet part 663 and the water outlet part 664. In addition, the head inner 53 may provide a mounting structure of an inlet ring 541 and an outlet ring 542 for seal ring the water inlet part 663 and the water outlet part 664. In addition, the head inner 53 may provide a structure in which a filter sensing device 55 for detecting the filter 60 is mounted. In addition, the head inner 53 may be configured to have a rotation protrusion 669 inserted therein to facilitate relative rotation of the housing 600.

In detail, the head inner 53 may include an inner base 532 and an inner wall 531. The inner base 532 may form a lower surface of the head inner 53. In addition, the inner base 532 may be formed in a circular shape. The center of the inner base 532 may be positioned on the same extension line as the center of the head body 52. In a state where the head inner 53 is coupled to the head body 52, the inner base 532 may be positioned higher than the lower end of the head body 52.

The inner base 532 may be formed with the inlet hole 5321 and the outlet hole 5323. The inlet hole 5321 and the outlet hole 5323 may be disposed parallel to each other. In addition, the inlet hole 5321 and the outlet hole 5323 may be positioned between the first guide hole 5231 and the second guide hole 5241. Therefore, when the first guide protrusion 625 and the second guide protrusion 626 are inserted and mounted into the first guide hole 5231 and the second guide hole 5241, the water inlet part 663 and the water outlet part 664 may be naturally inserted into the inlet hole 5321 and the outlet hole 5323, respectively.

The inlet hole 5321 and outlet hole 5323 may be formed in an elliptical shape corresponding to the cross-sectional shape of the water inlet part 663 and the water outlet part 664, respectively. In addition, the inlet hole 5321 and outlet hole 5323 may be disposed to have directionality.

Accordingly, the water inlet part 663 and water outlet part 664 can be inserted and mounted into the corresponding inlet hole 5321 and outlet hole 5323 respectively without being incorrectly mounted. Since incorrect mounting can be prevented when mounting the filter 60, the correct operation of the valve 56 inside the head 50 can be ensured by inserting the water inlet part 663 when mounting the filter 60.

In addition, since the water inlet part 663 and water outlet part 664 have an elliptical cross-sectional shape, the directionality can be easily checked when the filter 60 is viewed from above, and it can be easy to recognize the exact alignment state.

In addition, even if torque is applied to the water inlet part 663 and water outlet part 664 that maintain a fixed state compared to the rotating housing 600, it is possible to maintain a structurally stable fixed state without rotating or flowing.

For example, the inlet hole 5321 may be formed so that the major axis of the cross-section is disposed in the front and rear direction, and the outlet hole 5323 may be formed so that the major axis of the cross-section is disposed in the left and right direction.

An inlet edge 5325 extending upward may be formed around the inlet hole 5321. The inlet edge 5325 may form a space into which the water inlet part 663 is inserted. In addition, the upper end of the inlet edge 5325 may support the inlet ring 541. The inlet ring 541 may be secured to the inlet edge 5325 to prevent deformation and detachment.

An inclined surface 5322 may be formed between the inlet hole 5321 and the inlet edge 5325. The inclined surface 5322 guides the water inlet part 663 to be inserted into the inside of the inlet hole 5321, and allows the water inlet part 663 to be smoothly removed without being caught on the end part of the inlet hole 5321 when the filter 60 is separated.

Meanwhile, a valve 56 may be provided above the inlet hole 5321. The valve 56 may open and close a flow path communicating with the inlet hole 5321. The valve 56 may have a structure such as a check valve. The valve 56 may be opened by coming into contact with the water inlet part 663 when the filter 60 is mounted and the water inlet part 663 is inserted into the inlet hole 5321. In addition, in a state where the filter 60 is not mounted, the valve may be maintained in a closed state to prevent water leakage.

An outlet edge 5326 extending upward may be formed around the outlet hole 5323. The outlet edge 5326 may form a space into which the water outlet part 664 is inserted. In addition, the upper end of the outlet edge 5326 may support the outlet ring 542. The outlet ring 542 may be secured to the outlet edge 5326 to prevent deformation and detachment.

Therefore, when the head inner 53 is mounted on the head body 52, the inlet ring 541 and the outlet ring 542 can be fixed in the upper and lower direction by the head body 52 and the inlet edge 5325 and the outlet edge 5326.

An inclined surface 5324 may be formed between the outlet hole 5323 and the outlet edge 5326. The inclined surface 5324 guides the water outlet part 664 to be inserted into the inside of the outlet hole 5323, and allows the water outlet part 664 to be smoothly removed without being caught on the end part of the outlet hole 5323 when the filter 60 is separated. In particular, the filter 60 can be separated by being bent while being rotated, and the separated movement of the filter 60 can be smoothly facilitated by the inclined surface 5322, 5324.

Meanwhile, a filter sensing device 55 for sensing the mounting of the filter 60 may be provided inside the head body 52. In addition, a electric wire 550 connected to the filter sensing device 55 may extend upward from the head body 52.

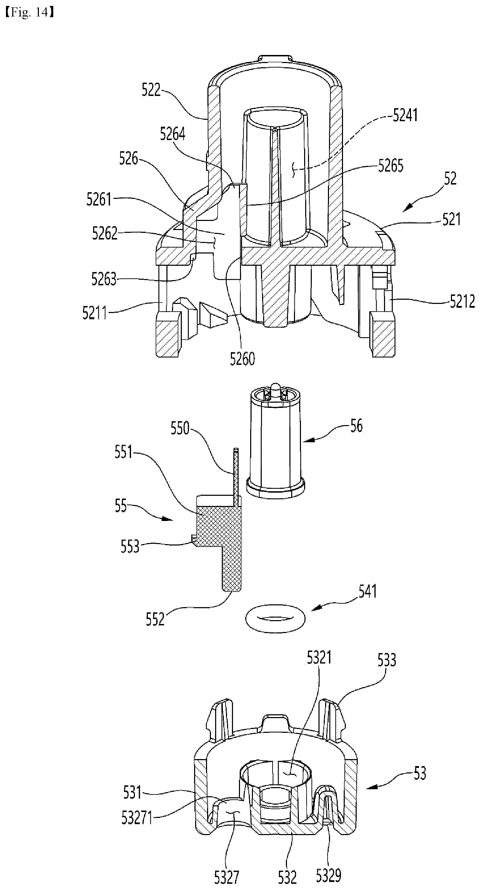

A sensing hole 53275327 into which a sensing member 668 to be described below is inserted may be formed in the inner base 532. In addition, the filter sensing device 55 may be provided at the upper end of the sensing hole 5327. Accordingly, when the filter 60 is mounted on the head 50, the sensing member 668 (in FIG. 14) is inserted into the sensing hole 5327, and the filter sensing device 55 can detect the sensing member 668 to determine whether the filter 60 is mounted.

An inclined surface 5328 is formed around the circumference of the sensing hole 5327 to facilitate the entry and exit of the sensing member 668.

The inner base 532 may be formed with a rotation groove 5329 into which the rotation protrusion 669 is inserted. The rotation groove 5329 may extend upward and be formed in a shape corresponding to the rotation protrusion 669 so that the rotation protrusion 669 (in FIG. 14) may be closely attached. Accordingly, the generation of torque may be facilitated when the housing 600 is rotated. In addition, the rotation protrusion 669 and the rotation groove 5329 may allow the filter cover 66 (in FIG. 14) and the head inner 53 to be firmly coupled to each other when the filter 60 is mounted, thereby preventing the water inlet part 663 and the water outlet part 664 from moving when the housing 600 is rotated.

An inclined or rounded inclined surface 5320 may be formed around the circumference of the rotation groove 5329. Accordingly, while inducing the insertion of the rotation protrusion 669, the rotation protrusion 669 may be easily entered and exited without being caught in the rotation groove 5329 when the filter 60 is detached.

The sensing hole 5327 and the rotation groove 5329 may be disposed at positions facing each other. In addition, the disposition of the sensing hole 5327 and the rotation groove 5329 may intersect the disposition positions of the inlet hole 5321 and the outlet hole 5323. For example, the inlet hole 5321 and the outlet hole 5323 may be disposed on the left and right sides with respect to the center of the inner base 532, and the sensing hole 5327 and the rotation groove 5329 may be disposed in the front and rear direction.

The inner base 532 may be formed to have a smaller size than the opened lower surface of the head body 52. In addition, the inner wall 531 may extend upward along the circumference of the inner base 532. The inner wall 531 may extend to the upper end of the head lower 521.

An inner coupling part 533 may protrude upwardly from the upper end of the inner wall 531. The inner coupling part 533 may be coupled to the upper surface of the head lower 521 formed stepwise on the upper end of the head lower 521. For example, a coupling hole 5213 may be formed on the upper surface of the head lower 521, and a hook-shaped inner coupling part 533 may penetrate the coupling hole 5213. By coupling the inner coupling part 533 to the coupling hole 5213, the head inner 53 may be fixedly mounted to the inner side of the head body 52. In addition, a coupling guide 5311 may be formed on the upper end of the inner wall 531. The coupling guide 5311 may be inserted into the head body 52 in the shape of a protrusion protruding upward. At this time, the coupling guide 5311 is formed with different sizes so that the head inner 53 can be prevented from being installed incorrectly and mounted in an accurate position.

The outer surface of the inner wall 531 may be spaced apart from the inner surface of the head body 52. At this time, the thickness T1 of the first guide part 5232 may be formed thinner than the thickness T2 of the second guide part 5242. Accordingly, the gap G between the outer end of the first guide part 5232 and the outer surface of the inner wall 531 is formed so that the protrusion extension part 6256 (in FIG. 16) of the first guide protrusion 625 can be inserted.

On the other hand, the gap between the outer end of the second guide part 5242 and the outer surface of the inner wall 531 is narrower than the thickness of the protrusion extension part 6256, making insertion of the protrusion extension part 6256 impossible.

The radius R1 from the center C of the head 50 or the head inner 53 to the first guide part 5232 may be formed to be larger than the radius R2 to the second guide part 5242. Therefore, when the filter 60 is mounted, a gap G into which the protrusion extension part 6256 can be inserted may be provided between the outer end of the head inner 53 and the first guide part 5232. When the first guide protrusion 625 is attempted to be inserted into the second guide 524, the protrusion extension part 6256 gets caught on the second guide part 5242. Therefore, the first guide protrusion 625 cannot be inserted into the second guide 524.

In other words, only the first guide protrusion 625 and the second guide protrusion 626, which correspond to each other, can be inserted into the first guide 523 and the second guide 524, respectively. In addition, the water inlet part 663 and the water outlet part 664 can also be inserted into the inlet hole 5321 and the outlet hole 5323, which have corresponding cross-sectional shapes, respectively.

In addition, when the first guide protrusion 625 and the second guide protrusion 626 are rotated and inserted so as to be positioned in the check window 5211 and the rear check window 5212, respectively, the mounting of the filter 60 is completed. In addition, the water inlet part 663 and the water outlet part 664 are inserted so as to pass through the inlet ring 541 and the outlet ring 542 which are positioned inside the inlet hole 5321 and the outlet hole 5323, thereby preventing water leakage between the head 50 and the filter 60.

Inside the head body 52, a flow path communicating with the water inlet pipe 103, the water outlet pipe 104, and the water inlet part 663 and the water outlet part 664 may be formed. In addition, a valve 56 for opening and closing the flow path communicating with the water inlet part 663 may be mounted inside the head body 52.

Below, the flow path structure inside the head body 52 will be examined with reference to the drawings.

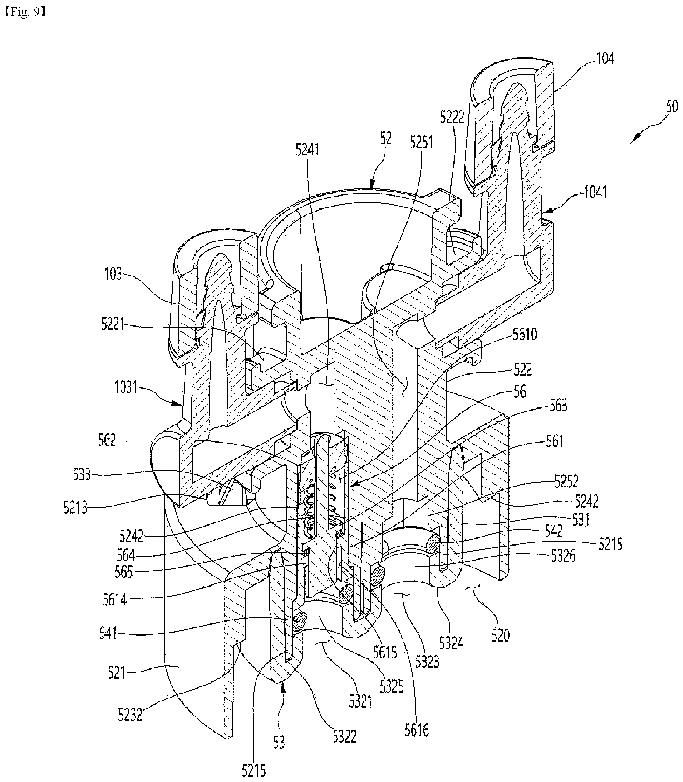

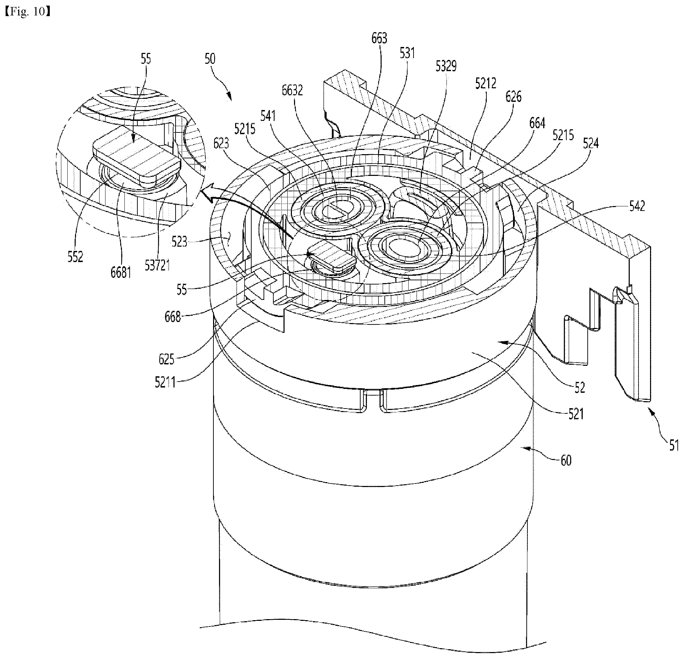

FIG. 9 is a cross-sectional view taken along line 9-9 of FIG. 4, and FIG. 10 is a perspective view taken along line 10-10 of Figure 3.

As illustrated, an inlet flow path 5241 communicating with the water inlet pipe connection part 5221 may be formed inside the head body 52, and an outlet flow path 5251 communicating with the water outlet pipe connection part 5222 may be formed.

In addition, inside the head body 52, a valve mounting part 5242 connected to the inlet flow path 5241 and equipped with a valve 56 may be formed. The valve 56 is for selectively supplying water supplied from the inlet flow path 5241 toward the filter 60, and may be opened and closed according to the mounting of the filter 60. The water inlet part 663 may be inserted toward the valve 56, and when the valve 56 is opened, the water inlet part 663 and the inlet flow path 5241 may communicate with each other.

In addition, an outlet accommodation part 5252 connected to the outlet flow path 5251 and into which the water outlet part 664 is inserted may be formed inside the head body 522. The cross-sectional shapes of the valve mounting part 5242 and the outlet accommodation part 5252 may be formed into an elliptical shape corresponding to the cross-sectional shapes of the water inlet part 663 and the water outlet part 664.

Meanwhile, when the head inner 53 is coupled to the head body 52, the body extension part 5215 of the head body 52 can be inserted between the inlet edge 5325 and the outlet edge 5326 and the inner wall 531. The body extension part 2515 is formed in a cylindrical shape with an open lower surface, and a pair of body extension parts 2515 can be formed on the left and right sides. In addition, the upper ends of the water inlet part 663 and the water outlet part 664 can be inserted into the inside of the body extension part 2515. In addition, the inlet ring 541 and the outlet ring 542 can be respectively provided inside the body extension part 5215.

The inlet ring 541 and outlet ring 542 are formed in a ring shape and can be formed in an elliptical shape corresponding to the inlet hole 5321 and the outlet hole 5323. In addition, the inlet ring 541 is restrained in the upper and lower direction by the upper end of the inlet edge 5325 and the lower end of the valve 56, and the outward flow can be restrained by the inner surface of the body extension part 5215.

When the water inlet part 663 and the water outlet part 664 are inserted, the inlet ring 541 and outlet ring 542 can maintain the mounting position, prevent the flow of the water inlet part 663 and the water outlet part 664, and maintain a sealed state.

In addition, the cross-sectional shape of the water inlet part 663 and the water outlet part 664 at least in the part of the total upper and lower height where the inlet ring 541 and outlet ring 542 are located is formed into an elliptical shape corresponding to the inlet ring 541 and outlet ring 542, so that seal ring can be guaranteed.

Meanwhile, the valve 56 may be provided above the inlet ring 541. Then, when the filter 60 is mounted on the head 50, the valve 56 may be opened by the water inlet part 663. Then, when the filter 60 is separated from the head 50, the valve 56 is closed to shield the inlet flow path 5241 and prevent water from being supplied toward the filter 60.

Below, the valve 56 will be described in more detail with reference to the drawings.

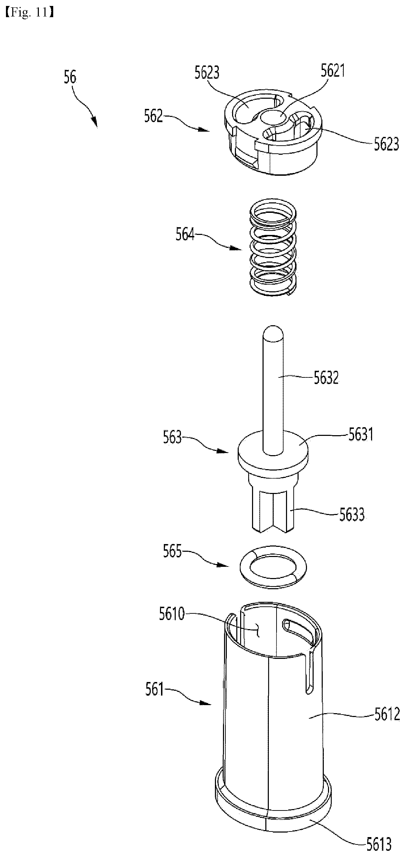

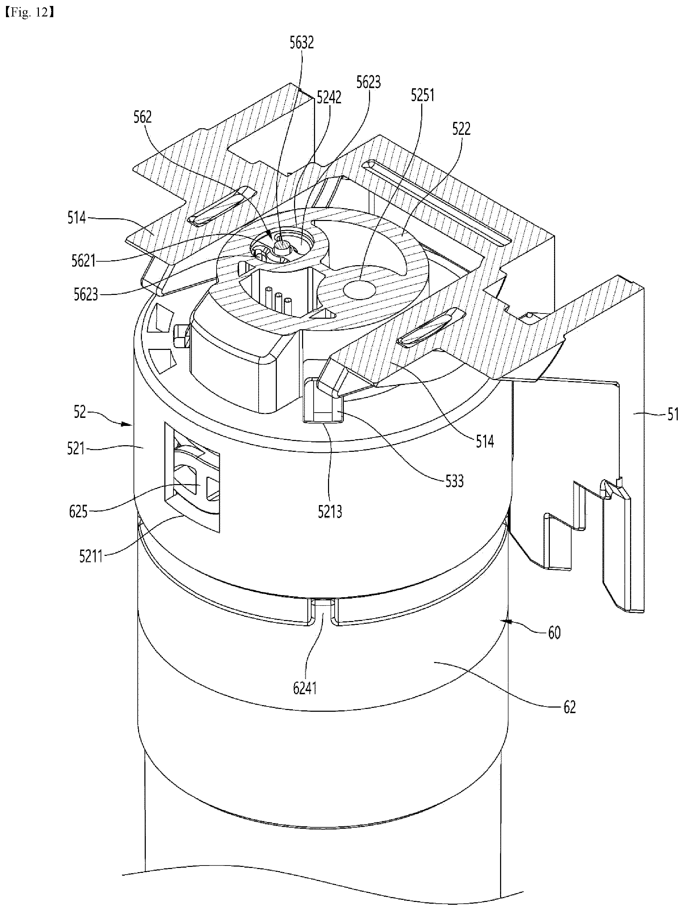

FIG. 11 is an exploded perspective view illustrating a valve, which is a component of the head, and FIG. 12 is a perspective view taken along line 12-12 of FIG. 3.

As illustrated, the valve 56 may include a valve case 561, a piston 563, a spring 564, and a valve cap 562.

The valve case 561 is formed in a tubular shape with an open upper surface 5611 and a lower surface 5613, and may be formed in an elliptical shape whose cross-sectional shape corresponds to the valve mounting part 5242. The circumference of the lower surface 5613 of the valve case 561 protrudes outward and may be fixed to the valve mounting part 5242. In addition, the lower surface 5613 of the valve case 561 may be in contact with the inlet ring 541 from above to support the inlet ring 541.

In addition, the circumferential surface 5612 of the valve case 561 can be in contact with the valve mounting part 5242. Meanwhile, as illustrated in FIG. 9, a piston support part 5614 protruding inwardly may be formed inside the valve case 561. Based on the piston support part 5614, an inlet accommodation part 5616 into which the upper end of the water inlet part 663 is inserted may be formed below, and a piston accommodation part 5610 in which the piston 563 is accommodated may be formed above. In addition, a case passage 5615 may be formed inside the piston support part 5614. At this time, the inlet accommodation part 5616 and the piston accommodation part 5610 may have an elliptical cross-sectional shape, and the case passage 5615 may have a circular cross-sectional shape. In addition, the major axes of the inlet accommodation part 5616 and the piston accommodation part 5610 are formed larger than the diameter of the case passage 5615 to facilitate water flow when the flow path is opened by the movement of the piston 563.

The piston 563 is provided in the piston accommodation part 5610 and can move in the vertical direction to open and close the case passage 5615. In addition, a valve cap 562 can be provided on the upper surface 5611 of the valve case 561. In addition, a spring 564 is provided between the valve cap 562 and the piston 563 to elastically support the piston 563.

The piston 563 may include a seat part 5631 that shields the case passage 5615, a contact part 5633 that protrudes downward from the lower surface of the seat part 5631 and passes through the case passage 5615, and a rod 5632 that protrudes upward from the upper surface of the seat part 5631 and penetrates the valve cap 562.

The sheet part 5631 is formed in a circular shape and can open and close the case passage 5615. At this time, the case passage 5615 is formed in a circular shape corresponding to the sheet part 5631 and can be opened and closed by movement of the piston 563 in the vertical direction. In addition, the sheet part 5631 can be formed in a circular shape having a diameter corresponding to the length of the minor axis of the cross-section of the elliptical valve case 561.

Accordingly, a relatively wide flow path space S is provided between a part corresponding to the position of the major axis of the cross-section of the valve case 561 and the outer surface of the seat part 5631. Accordingly, when the case passage 5615 is opened by the upward movement of the piston 563, a larger amount of water can be supplied toward the water inlet part 663.

Meanwhile, the contact part 5633 protrudes downward through the case passage 5615 and can come into contact with the upper end of the water inlet part 663 when the filter 60 is mounted. For example, the contact part 5633 can be formed so that at least a part thereof intersects with the inlet contact part 6632 of the water inlet part 663. Accordingly, when the water inlet part 663 is inserted and comes into contact with the contact part 5633, the contact part 5633 can be prevented from being inserted into the water inlet part 663 and partially shielding the flow path. For example, the contact part 5633 can be formed in a cross-shaped or straight cross-sectional shape to secure a space for water flow.

In addition, a piston ring 565 may be provided on the upper end of the contact part 5633, that is, on the lower surface of the seat part 5631. The piston ring 565 may be in contact with the circumference of the case passage 5615 to seal the space between the case passage 5615 and the piston 563. The piston ring 565 may be formed in a circular ring shape corresponding to the case passage 5615 and the seat part 5631.

The rod 5632 extends upward from the center of the seat part 5631 and can be extended to pass through the rod hole 5621 of the valve cap 562. Therefore, when the piston 563 moves in the vertical direction, the piston 563 can in the vertical direction without being tilted or eccentric by the rod 5632.

In addition, the spring 564 may be disposed to be penetrated by the rod 5632. The upper and lower ends of the spring 564 may be supported by the valve cap 562 and the seat part 5631, respectively. In addition, by the elasticity of the spring 564, the seat part 5631 may maintain a state of shielding the case passage 5615. In addition, the seat part may be compressed when the piston 563 moves upward.

The valve cap 562 can shield the upper surface 5611 of the valve case 561. The valve cap 562 can be formed in an elliptical shape corresponding to the cross-section of the upper part of the valve case 561. In addition, a rod hole 5621 through which the rod 5632 passes can be formed in the center of the valve cap 562. In addition, a cap through-hole 5623 penetrating the valve cap 562 can be formed in the valve cap 562. The cap through-hole 5623 can be formed on both sides of the rod hole 5621 as a passage into which water flowing through the inlet flow path 5241 flows. Accordingly, the case passage 5615 is opened by the movement of the piston 563, and water supplied to the inlet flow path 5241 can pass through the cap through-hole 5623 and the case passage 5615 and then through the valve 56 to flow into the water inlet part 663.

Meanwhile, the water supply valve 102 is operated to supply water to the filter assembly 40, and the water supply valve 102 can be turned on and off by the filter sensing device 55.

Below, the filter sensing device is described in more detail with reference to the drawings.

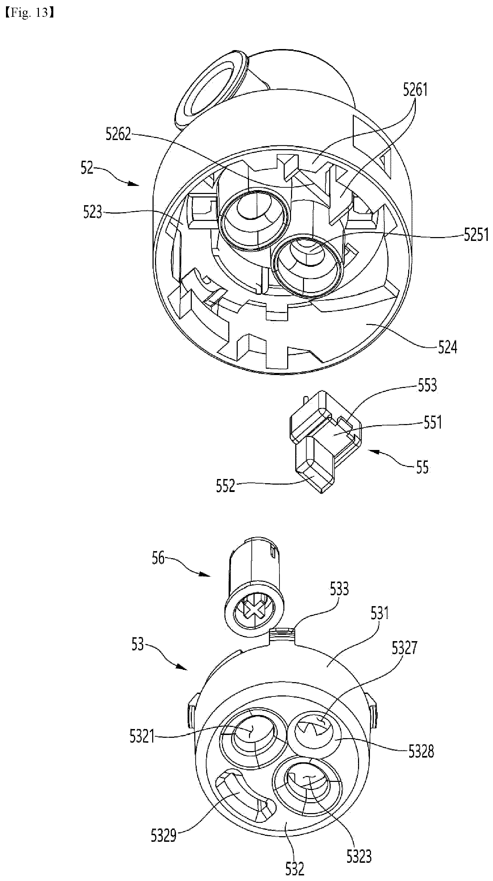

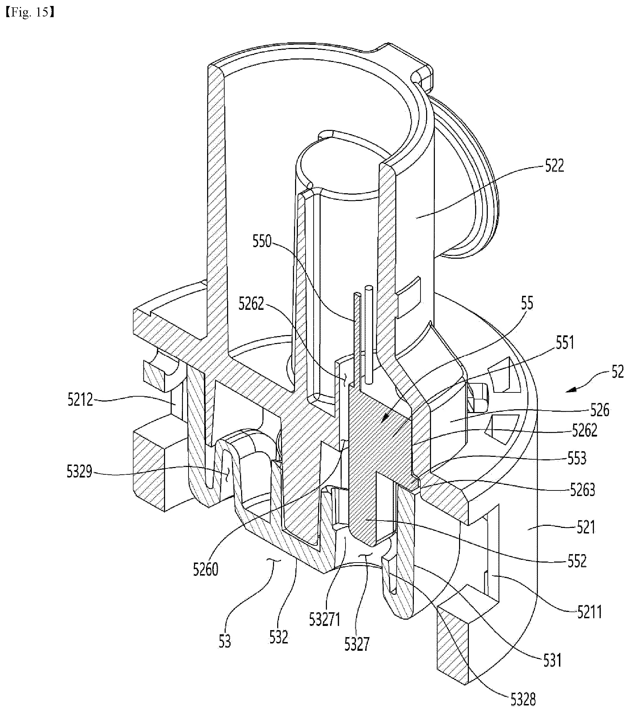

FIG. 13 is an exploded perspective view illustrating a state where the head is exploded as seen from below, FIG. 14 is a cut-away exploded perspective view illustrating the head, and FIG. 15 is a perspective view taken along line 15-15 of FIG. 4.

As illustrated, the head 50 may be equipped with the filter sensing device 55. The filter sensing device 55 may be equipped inside the head body 52 and may sense the filter 60 when the filter 60 is mounted.

For example, the filter sensing device 55 may be a Hall sensor that senses changes in a magnetic field. As another example, the filter sensing device 55 may be configured as a proximity sensing device, an RFID reader, or the like. The filter sensing device 55 may be configured as various other non-contact devices that can detect the mounting of the filter 60.

In detail, the filter sensing device 55 may include a body part 551 fixed to the head body 52 and a sensing part 552 extending downward from the body part 551 to sense the sensing member 668.

The body part 551 can have substrates and components for the operation and signal processing of the filter sensing device 55 placed thereon. In addition, the body part 551 can be formed to be larger than the width of the sensing part 552. In addition, the body part 551 can be structurally stably and firmly fixed by the head inner 53 coupled to the inside of the head body 52.

The sensing part 552 may extend downward from the body part 551, and the end part of the sensing part 552 may be positioned above the sensing hole 5327. At this time, the extension length of the sensing part 552 may be formed so that, when the filter sensing device 55 is mounted, the lower end of the sensing part 552 is positioned at the same level as or slightly higher than the upper end of the hole edge 53271 of the sensing hole 5327. Accordingly, when the sensing member 668 is fully inserted into the sensing hole 5327, the lower end of the sensing part 552 may not directly contact the sensing member 668 and may be spaced apart from the sensing hole 5327 at a detectable distance.

Meanwhile, an alignment protrusion 553 may be formed on one side of the body part 551. When the filter sensing device 55 is mounted, the alignment protrusion 553 may be inserted into a protrusion groove 5263 formed in the sensing device mounting part 526. By coupling the alignment protrusion 553 and the protrusion groove 5263, the filter sensing device 55 may be positioned at an accurate position. Accordingly, the sensing part 552 may be positioned at an accurate position in the inner region of the sensing hole 5327, and thus reliable sensing of the filter 60 may be ensured.

The electric wire 550 may be connected to the upper end of the body part 551. The electric wire 550 may extend upward and be guided upward through the upper opening 5264 of the sensing device mounting part 526. In addition, the electric wire 550 may be guided to the outside of the head 50 through the head upper 522.

Meanwhile, the body part 551 and the sensing part 552 may be sealed to prevent moisture penetration, and may be formed by being surrounded by a separate case or a seal ring material made of waterproof material.

The head body 52 may be formed with a sensing device mounting part 526 on which the filter sensing device 55 is mounted. The sensing device mounting part 526 may be formed on the head upper 522, and the sensing device mounting part 526 may include a body hole 5260 that is opened downward. The filter sensing device 55 may be inserted downward so as to pass through the body hole 5260. The body hole 5260 may be formed penetrating the upper surface of the head lower 521. In other words, the filter sensing device 55 may be inserted from the inside of the head body 52 through the upper surface of the head lower 521. In addition, the sensing device mounting part 526 may be configured to be opened downward so that the filter sensing device 55 may be inserted downward. In addition, the upper surface may be formed with the upper surface opening 5264. Accordingly, the sensing device mounting part 526 may be opened to communicate with each other in the upper and lower directions, and even when water seeps in due to water leakage, the water does not accumulate but is discharged downward, thereby preventing the filter sensing device 55 from being damaged.

The sensing device mounting part 526 may include a pair of side support parts 5261 extending downward. The side support parts 5261 may be spaced apart from each other to form a mounting space 5262 into which the filter sensing device 55 is inserted. In addition, the side support parts 5261 may support both sides of the filter sensing device 55. In other words, the side support parts 5261 may support both sides of the body part 551.

The other side of the body part 551 may be supported by the circumferential surface of the head upper 522. At this time, the outer surface of the head upper 522 corresponding to the sensing device mounting part 526 may protrude outwardly in order to accommodate the filter sensing device 55. In other words, in order to secure an accommodation space for the body part 551 which is wider than the sensing part 552, the head upper 522 may protrude outwardly in a corresponding shape.

In addition, the sensing device mounting part 526 may further include an inner support part 5265 connecting a pair of side support parts 5261. The inner support part 5265 may be formed at a position facing the protruding portion of the head upper 522. In addition, the inner support part 5265 may extend upward from the lower surface of the head upper 522.

Accordingly, the entire circumferential surface of the filter sensing device 55 can be restrained by the protruding shape of the side support part 5261, the inner support part 5265, and the head upper 522, and the filter sensing device 55 can be stably fixed to the sensing device mounting part 526.

In particular, the filter sensing device 55 may be placed on the head upper 522 spaced apart from the circumferential surface of the head lower 521 that is directly coupled with the filter 60. Accordingly, even when the filter 60 is repeatedly attached or detached, the filter 60 is prevented from directly contacting or transmitting impact to the filter sensing device 55, thereby preventing damage to the filter sensing device 55.

In addition, a projection groove 5263 may be formed in the sensing device mounting part 526 at a position facing the alignment protrusion 553. The projection groove 5263 may be formed at the opened lower end of the sensing device mounting part 526. Accordingly, the alignment protrusion 553 may be inserted into the projection groove 5263 when the filter sensing device 55 is completely inserted and mounted, thereby aligning the filter sensing device 55.

Meanwhile, the filter sensing device 55 can be more firmly fixed by the head inner 53 coupled to the head body 52 while the filter sensing device 55 is inserted into the sensing device mounting part 526.

The head inner 53 is inserted from below through the opened lower surface of the head body 52 and can be vertically coupled with the head body 52. The valve 56 and the inlet ring 541 and the outlet ring 542 can be disposed between the head body 52 and the head inner 53, and can be fixedly mounted by coupling the head inner 53.

In detail, the inner base 532 of the head inner 53 may be formed with the sensing hole 5327, and a hole edge 53271 extending upward along the circumference of the sensing hole 5327 may be formed. The hole edge 53271 may contact the outer surface of the sensing member 668 and guide the insertion of the sensing member 668. At this time, the height of the hole edge 53271 may be extended to a height adjacent to the lower end of the sensing part 552, and may have a height that does not directly contact the sensing part 552.

The inner base 532 may further be formed with a hole inclined surface 5328 that connects the circumference of the sensing hole 5327 and the lower end of the hole edge 53271. Accordingly, the upper end of the sensing member 668 can be easily inserted when the filter 60 is coupled.

In addition, The inner wall 531 may extend upward from the inner base 532. At this time, the height of the inner wall 531 may be formed to a height that can support the filter sensing device 55 from below.

The inner wall 531 may be positioned below the sensing device mounting part 526. Then, when the head inner 53 is coupled to the head body 52, the upper end of the inner wall 531 may be in contact with the lower surface of the body part 551. The filter sensing device 55 may be pressed upward by the inner wall 531 to maintain the mounting position, and may be supported downward by the upper end of the inner wall 531 to maintain a fixed state.

In particular, the filter sensing device 55 can be fixed to the head 50 simply by inserting and coupling the head inner 53 into the head body 52 without requiring a separate fastening member for fixation. Accordingly, even when replacement or maintenance of the filter sensing device 55 is required, the filter sensing device 55 can be easily attached or detached simply by separating the head inner 53.

Below, the filter 60 is described in detail with reference to the drawings.

FIG. 16 is an exploded perspective view illustrating the filter.

As illustrated, the filter 60 may include a housing 600 forming an outer appearance, a filter member 63 positioned inside the housing 600, and a filter cover 66 exposed through the upper surface of the housing 600.

The housing 600 may include an upper housing 62 forming the upper part of the housing 600 and a lower housing 61 forming the lower part of the housing 600. The upper housing 62 and the lower housing 61 may be coupled with each other to form a space in which the filter member 63 is accommodated.

The upper housing 62 and the lower housing 61 may be formed in a cylindrical shape while coupled to form the outer appearance of the filter 60. In addition, the upper housing 62 and the lower housing 61 may be formed of a plastic material and may be coupled with each other by ultrasonic welding or rotational welding.

The upper housing 62 may be configured to have open upper and lower surfaces, and a space 6200, 620 in which a filter cover 66 is rotatably positioned may be formed inside the upper housing 62.

For example, the upper housing 62 may include an upper part 623 inserted into the interior of the head body 52 and a lower part 622 exposed downward from the head body 52. In addition, a first guide protrusion 625 and a second guide protrusion 626 may be formed around the circumference of the upper part 623 so that the filter 60 may be detachably coupled to the head 50.

The upper housing 62 may further be formed with a housing coupling part 621 that extends further downward than the lower part 622. The housing coupling part 621 may be inserted into the inside of the lower housing 61 and may come into contact with the inner surface of the lower housing 61. In addition, a coupling groove 6221 into which the upper end of the lower housing 61 is inserted may further be formed between the lower end of the lower part 622 and the housing coupling part 621. The coupling groove 6221 and the upper end of the lower housing 61 may be fused and coupled to each other.

The upper surface of the lower housing 61 is open and can form an accommodation space 611 in which the filter member 63 is accommodated. The filter member 63 can be inserted through the open upper surface of the lower housing 61 and accommodated inside the accommodation space 611.

Meanwhile, the housing 600 can rotate relative to the filter cover 66. In other words, the filter cover 66 is maintained in an aligned state for coupling with the head 50, and the housing 600 can rotate to be fastened with the head 50.

The filter member 63 may be formed in a cylindrical shape with a hollow 631 formed through the center. The filter member 63 may be formed of a porous material and configured to purify water passing through the filter member 63. For example, water outside the filter member 63 may pass through the filter member 63 and flow into the hollow 631, and may flow upward through the hollow 631 to supply purified water.

The filter member 63 can be composed of various materials and types, and can be appropriately selected and used according to the required water purification performance. For example, the filter member 63 can be composed of various types of filters such as a membrane filter, a pre-carbon filter, and a sediment filter.

A lower supporter 64 may be provided on the lower surface of the filter member 63. The lower supporter 64 supports the filter 60 from below and may be in contact with the lower surface of the lower housing 61.

The lower supporter 64 may include a supporter lower surface 641, a lower edge 642, and a lower boss 643. The supporter lower surface 641 may be in contact with the lower surface of the filter member 63 to support the filter member 63. In addition, the lower edge 642 may extend upward along the circumference of the supporter lower surface 641 to support the lower circumference of the filter member 63. In addition, the lower boss 643 may protrude upward from the supporter lower surface 641. In addition, the lower boss 643 may be inserted from the lower part of the hollow 631 to support the inner surface of the filter member 63.

The upper supporter 65 is disposed on the upper end of the filter member 63, and can fix the upper part of the filter member 63 and simultaneously guide purified water through the hollow 631 toward the filter cover 66. In addition, the upper supporter 65 can also connect the filter member 63 and the filter cover 66 to each other.

The upper supporter 65 may include a supporter upper surface 651, an upper edge 652, a filter nipple 653, and an upper boss 654. The supporter upper surface 651 may be in contact with the upper surface of the filter member 63 to support the filter member 63. In addition, the upper edge 652 may extend downward along the circumference of the supporter upper surface 651 to support the upper circumference of the filter member 63.

In addition, a filter nipple 653 may protrude upwardly at the center of the upper surface 651 of the supporter. An exit 6531 communicating with the hollow 631 may be formed at the upper end of the filter nipple 653. In addition, a seal ring groove 5632 in which a nipple seal ring 6533 is mounted may be formed around the filter nipple 653. The filter nipple 653 may be configured to be inserted into a nipple accommodation part 665 of the filter cover 66.

In addition, the upper boss 654 may protrude downward from the upper surface 651 of the supporter. In addition, the upper boss 654 may be inserted from above the hollow 631 to support the inner surface of the filter member 63. The upper boss 654 may be communicated with the filter nipple 653. In other words, the filter nipple 653, the upper boss 654, and the hollow 631 are disposed on the same extension line and may be communicated with each other to form a flow path through which purified water from the filter member 63 passes.

The filter cover 66 is positioned inside the upper housing 62 and can divide the inside of the upper housing 62 into upper and lower parts. In addition, the filter cover 66 can be rotatably mounted on the upper housing 62. At this time, a seal ring 67 can be provided between the circumference of the filter cover 66 and the upper housing 62. Therefore, the filter cover 66 can prevent water leakage even when it is rotatably mounted on the upper housing 62.

The upper surface of the filter cover 66 may have the water inlet part 663 and water outlet part 664 protruding upward. In addition, the water inlet part 663 and water outlet part 664 may be exposed through the opened upper surface of the upper housing 62. In addition, when the filter 60 is mounted on the head 50, the water inlet part 663 and water outlet part 664 may be inserted into the inlet hole 5321 and outlet hole 5323.

On the upper surface of the filter cover 66, a rotation protrusion 669 inserted into the rotation groove 5329 may protrude upward. In addition, a sensing member 668 may protrude upward on the upper surface of the filter cover 66. In addition, a magnet 6681 may be mounted inside the sensing member 668. The sensing member 668 has a structure that protrudes upward from the upper surface 662 of the cover, and therefore may also be referred to as a sensing protrusion.

The rotation protrusion 669 and the sensing member 668 may be disposed in a direction intersecting with the disposition direction of the water inlet part 663 and the water outlet part 664.

Meanwhile, the sensing member 668 is inserted into the sensing hole 5327, and the outer surface of the sensing member 668 can be in contact with the inner surface of the sensing hole 5327. In addition, even when the rotation protrusion 669 is omitted, the sensing member 668 can be inserted into the sensing hole 5327 so that the head inner 53 and the filter cover 66 can be firmly fixed to each other. Accordingly, even if the housing 600 is rotated, the filter cover 666 can be maintained in a fixed state by the sensing member 668, and movement of the water inlet part 663 and the water outlet part 664 can be prevented.

Below, the upper structure of the filter 60 will be described in detail with reference to the drawings.

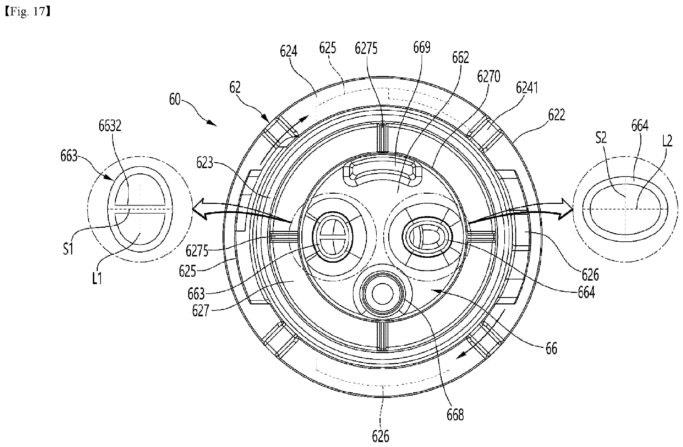

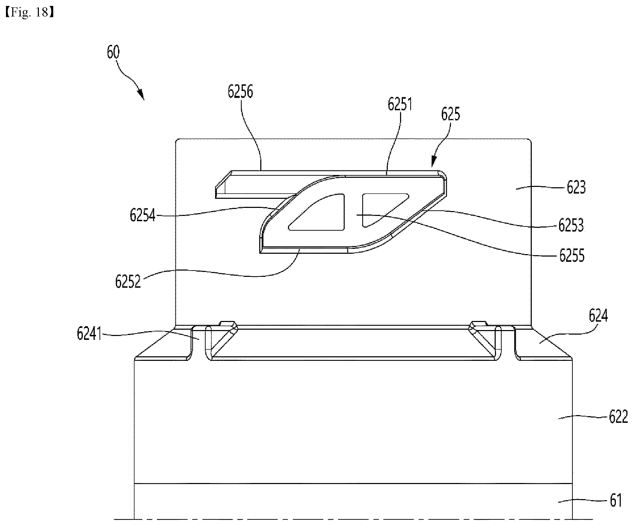

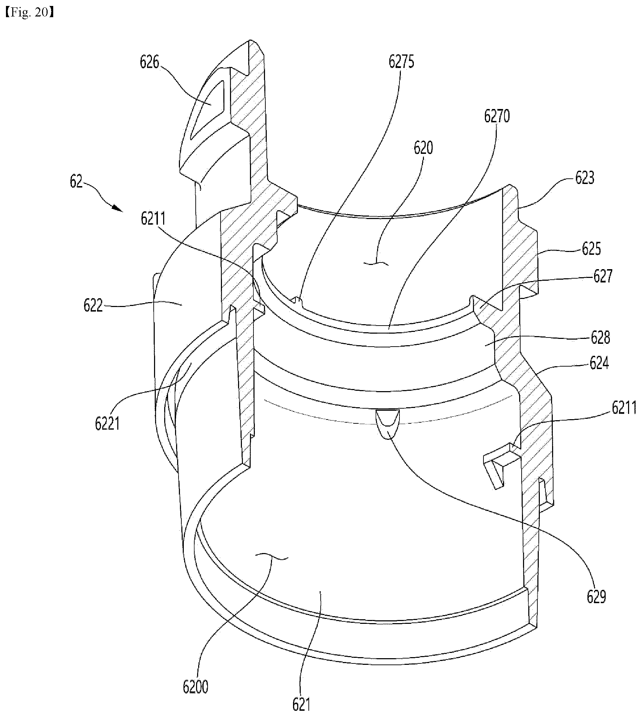

FIG. 17 is a plan view illustrating the filter, FIG. 18 is a side view illustrating the upper part of the filter as seen from one side, FIG. 19 is a side view illustrating the upper part of the filter as seen from the other side, and FIG. 20 is a perspective view taken along line 20-20 of FIG. 16.

As illustrated, the upper housing 62 may include an upper part 623 and a lower part 622. The upper part 623 may have a smaller diameter than the lower part 622. In addition, a lower end of the upper part 623 and an upper end of the lower part 622 may be formed with a connecting surface 624 having a downward slope. In addition, a housing rib 6241 protruding upward may be formed on the connecting surface 624.

The housing rib 6241 can be adjacent to the lower end of the head body 52 when the filter 60 is mounted. Therefore, it is possible to visually check that the filter 60 is completely fastened through the gap between the housing rib 6241 and the head body 52.

In addition, the housing rib 6241 may also serve as a guide for disposing a jig during rotational fusion of the upper housing 62 and the lower housing 61. A plurality of the housing ribs 6241 may be formed along the connecting surface 624. In addition, the housing ribs 6241 may be disposed symmetrically with respect to the center of the upper housing 62.

The first guide protrusion 625 and the second guide protrusion 626 may be formed to protrude on the outer surface of the upper part 623. The first guide protrusion 625 and the second guide protrusion 626 may be formed at positions facing each other with respect to the center of the housing 600. In addition, the first guide protrusion 625 may be formed in a shape that can be inserted into the first guide 523, and the second guide protrusion 626 may be formed in a shape that can be inserted into the second guide 524. In addition, the first guide protrusion 625 and the second guide protrusion 626 may be formed in different shapes to prevent incorrect mounting of the filter 60 and induce accurate mounting thereof.

In particular, the first guide protrusion 625 makes contact with the first guide 523 and the second guide 524 before the water inlet part 663 and the water outlet part 664 are inserted into the head inner. Therefore, the first guide protrusion 625 prevents the water inlet part 663 and the water outlet part 664 from coming into contact with the head inner when incorrectly mounted by the first guide 523, thereby fundamentally preventing deformation and damage of the water inlet part 663 and the water outlet part 664 due to incorrect mounting.

For example, the first guide protrusion 625 may be formed on the left side with respect to the center of the filter 60. In addition, the first guide protrusion 625 may be positioned on the side of the water inlet part 663.

The first guide protrusion 625 may include a first upper part 6251 and a first lower part 6252 forming upper and lower surfaces, a first front inclined part 6253 connecting the front ends of the first upper part 6251 and the first lower part 6252, and a first rear inclined part 6254 connecting the rear ends of the first upper part 6251 and the first lower part 6252. The first upper part 6251, the first lower part 6252, the first front inclined part 6253, and the first rear inclined part 6254 may protrude from the outer surface of the upper housing 62 with the same thickness. In particular, the first front inclined part 6253 can be protruded to move into contact with the first guide part 5232, and rotation and upward movement of the filter 60 can be facilitated.

The length of the first upper part 6251 and the first lower part 6252 may be formed to correspond to the size of the first guide hole 5231 so that the first guide protrusion 625 may be inserted into the first guide hole 5231 by upward movement of the filter 60. In addition, the first upper part 6251 and the first lower part 6252 may extend parallel to the upper end of the upper housing 62. In addition, the disposition height of the first guide protrusion 625 may be positioned at the upper part of the upper part 623. In addition, a connecting rib 6255 that vertically connects the first upper part 6251 and the first lower part 6252 may be further formed.

The first front inclined part 6253 and the first rear inclined part 6254 can be formed in a shape corresponding to the inclination of the first guide part 5232. Accordingly, the first front inclined part 6253 or the first rear inclined part 6254 can move along the first guide part 5232.

Meanwhile, a rearwardly extending protrusion extension part 6256 may be formed at the rear end of the first upper part 6251. The protrusion extension part 6256 may protrude rearwardly along the same extension line as the first upper part 6251 and may protrude along the outer surface of the upper part 623. In addition, the protrusion thickness of the protrusion extension part 6256 may be formed smaller than the protrusion thickness of the first upper part 6251. In addition, the protrusion thickness of the protrusion extension part 6256 may be formed smaller than the gap G between the head inner 53 and the first guide part 5232. Accordingly, when the first guide protrusion 625 is inserted into the first guide hole 5231, the protrusion extension part 6256 is inserted between the first guide part 5232 and the outer surface of the head inner 53, thereby enabling insertion and rotational movement of the first guide protrusion 625.

The second guide protrusion 626 may include a second upper part 6261 and a second lower part 6262 forming upper and lower surfaces, a second front inclined part 6263 connecting the front ends of the second upper part 6261 and the second lower part 6262, and a second rear inclined part 6264 connecting the rear ends of the second upper part 6261 and the second lower part 6262. The second upper part 6261, the second lower part 6262, the second front inclined part 6263, and the second rear inclined part 6264 may protrude from the outer surface of the upper part 623 with the same thickness. In particular, the second front inclined part 6263 may protrude so as to move into contact with the second guide part 5242. In addition, the protrusion thickness of the second guide protrusion 626 may be the same as the protrusion thickness of the first guide 523.

The length of the second upper part 6261 and the second lower part 6262 may be formed to correspond to the size of the second guide hole 5241 so that the second guide protrusion 626 may be inserted into the second guide hole 5241 by upward movement of the filter 60. In addition, the second upper part 6261 and the second lower part 6262 may extend parallel to the upper end of the upper housing 62. In addition, the disposition height of the second guide protrusion 626 may be the same as the disposition height of the first guide protrusion 625. In addition, a connecting rib 6265 may be further formed to vertically connect the second upper part 6261 and the second lower part 6262.

The second front inclined part 6263 and the second rear inclined part 6264 may be formed in a shape corresponding to the inclination of the second guide part 5242. Accordingly, the second front inclined part 6263 or the second rear inclined part 6264 may move while in contact with the second guide part 5242, and the rotation and upward movement of the filter 60 may be facilitated.

In addition, a downwardly recessed restraint groove 6266 may be formed in the second upper part 6261. The restraint groove 6266 may be inserted into the restraint part 5213 to restrain the filter 60 when the second guide protrusion 626 is moved to the rear check window 5212.

Meanwhile, a protrusion part may be formed inside the upper housing 62. The protrusion part may include a first protrusion part 627. In addition, the protrusion part may further include a second protrusion part 628. The first protrusion part 627 may divide the interior of the upper housing 62 into an upper space 620 in which the upper surface of the filter cover 66 is exposed, and a lower space 6200 in which the lower end of the filter cover 66 is rotatably accommodated.

The first protrusion part 627 may be formed on the upper part 623. The first protrusion part 627 may protrude toward the center of the upper housing 62 and form an upper opening 6270 through which the filter cover 66 passes. The first protrusion part 627 may support the circumference of the filter cover 66 so that the filter cover 66 is not separated upward even when the pressure inside the filter 60 increases.

In addition, a second protrusion part 628 may be formed below the first protrusion part 627. The second protrusion part 628 may be formed at the upper end of the lower part 622. In addition, the second protrusion part 628 may be formed continuously in a stepwise manner from the lower end of the first protrusion part 627. The second protrusion part 628 may protrude from the inner surface of the upper housing 62 toward the center of the upper housing 62 and may protrude lower than the first protrusion part 627. Therefore, the inner surface of the upper housing 62, the second protrusion part 628, and the first protrusion part 627 may be formed in a stepwise manner in sequence. The seal ring 67 can be disposed by the stepped shape of the first protrusion part 627 and the second protrusion part 628, and the filter cover 66 can be rotatably disposed inside the upper housing 62.

Meanwhile, a limiting protrusion 629 may be formed on the lower surface of the second protrusion part 628. The limiting protrusion 629 may protrude downward at a position corresponding to a limiting groove 6614 formed in the filter cover 66. Then, when the filter cover 66 is mounted on the inside of the upper housing 62, the limiting protrusion 629 may be inserted into the limiting groove 6614. Then, when the upper housing 62 rotates, the limiting protrusion 629 moves along the limiting groove 6614. Then, the limiting protrusion 629 may come into contact with one end of the limiting groove 6614 when the housing 600 is aligned before the filter 60 is mounted on the head 50. In addition, the limit protrusion 629 can come into contact with the other end of the limit groove 6614 when the housing 600 is rotated and the filter 60 is coupled to the head 50.

A supporting protrusion 6211 may be formed below the second protrusion part 628. The supporting protrusion 6211 may be configured to support the filter cover 66 from below when the filter cover 66 is mounted inside the upper housing 62.

The support protrusion 6211 protrudes from the inner surface of the upper housing 62 and may be formed at a position corresponding to the position of the lower end of the filter cover 66. A plurality of support protrusions 6211 may be formed at the same height. For example, a pair of support protrusions 6211 may be formed at a position facing each other. In addition, the pair of the support protrusions 6211 may be formed with different sizes to prevent incorrect assembly when coupled with the filter cover.

Meanwhile, with the filter cover 66 mounted on the upper housing 62, the water inlet part 663 and water outlet part 664 can be aligned directionally within the upper housing 62. Then, the user can easily check the alignment status of the water inlet part 663 and water outlet part 664 with the naked eye.

In detail, as illustrated in FIG. 17, the marker 6275 may be formed on the upper surface 6271 of the first protrusion part 627 of the filter 60. The markers 6275 may be formed on the upper, lower, left, and right sides in directions intersecting each other. The marker 6275 may be protruded or recessed into the upper surface 6271 of the first protrusion part 627 and may extend toward the center of the upper housing 62.

The marker 6275 may be protruded from the upper surface of the first protrusion part 627 and may extend toward the water inlet part 663 and the water outlet part 664. Accordingly, the marker 6275 may visualize the alignment state with the water inlet part 663 and the water outlet part 664. In addition, the marker may be protruded from the first protrusion part 627 to reinforce the strength of the first protrusion part 627, and may support the head inner 53 from below to prevent the head inner 53 from being separated due to water pressure.

For example, the water inlet part 663 and water outlet part 664 formed on the filter cover 66 may be disposed on the extension lines of the markers 6275 disposed on the left and right sides. In addition, the rotation protrusion 669 and the sensing member 668 formed on the filter cover 66 may be disposed on the extension lines of the markers 6275 disposed on the front and rear sides. In other words, when the upper surface of the filter 60 is viewed from above, the marker 6275 may be aligned on the same extension line as the water inlet part 663, water outlet part 664, and the rotation protrusion 669 and sensing member 668. Therefore, the user can visually check the alignment state of the filter cover 66.

In addition, the housing 600 can be rotated at a 90° angle when the filter 60 is mounted. Since the four markers 6275 are disposed at a 90° angle, the alignment state of the water inlet part 663, water outlet part 664, rotation protrusion 669, and sensing member 668 can be visualized as the housing 600 rotates.

Meanwhile, before the filter 60 is mounted on the head 50, the water inlet part 663 and the water outlet part 664 can be disposed between the first guide protrusion 625 and the second guide protrusion 626. In other words, the first guide protrusion 625 and the second guide protrusion 626 and the water inlet part 663 and the water outlet part 664 can be disposed on the same extension line in the left and right direction. In particular, the markers 6275 on both left and right sides, the first guide protrusion 625 and the second guide protrusion 626, the water inlet part 663 and the water outlet part 664 can all be positioned on the same extension line, and the user can easily check the alignment state of the filter cover 66.

In this state, while the filter 60 is mounted on the head 50, the housing 600 rotates, and the filter cover 66 remains a state of being fixed. Then, the first guide protrusion 625 and the second guide protrusion 626 can be rotated 90° clockwise. At this time, the rotation protrusion 669 and the sensing member 668 can be positioned between the first guide protrusion 625 and the second guide protrusion 626. In other words, the first guide protrusion 625 and the second guide protrusion 626, the front and rear markers 6275, and the rotation protrusion 669 and the sensing member 668 can all be disposed on the same extension line in the front and rear direction.

Meanwhile, the water inlet part 663 and water outlet part 664 may be formed in an elliptical shape when viewed from above. In addition, the water inlet part 663 and water outlet part 664 may be disposed in different directions when viewed from above. Therefore, when the filter 60 is mounted on the head 50, the water inlet part 663 and water outlet part 664 may be coupled to the inlet hole 5321 and outlet hole 5323 with directionality. In other words, due to the directionality of the cross-sectional shapes of the water inlet part 663 and water outlet part 664, the filter 60 can be prevented from being mounted incorrectly and its accurate mounting can be ensured.

For example, the water inlet part 663 and water outlet part 664 may be disposed so that the major axes of their respective elliptical cross sections face in a direction that intersects each other. In other words, the water inlet part 663 may be disposed so that the major axis L1 faces the front and rear direction and the minor axis S1 faces the left and right direction. In addition, the water outlet part 664 can be disposed so that the major axis L2 faces the left and right direction and the minor axis S2 faces the front and rear direction. In other words, the extension lines of the major axis of the cross section of the water inlet part 663 and the major axis L2 of the cross section of the water outlet part 664 can intersect each other perpendicularly.

The water inlet part 663 and the water outlet part 664 have a structure in which the cross-section is formed in an elliptical shape and the major axes L1, L2 of the cross-section extend in a direction intersecting each other, so that the filter cover 66 does not rotate despite the torque generated when the housing 600 rotates.

The elliptical cross-section of the water inlet part 663 and water outlet part 664 may be an elliptical shape having continuous rounds with a major axis and a minor axis, rather than a circle. In the present disclosure, the ellipse may be defined as including a structure in which the elliptical shape of the cross-section of the water inlet part 663 and water outlet part 664 has a section that is cut off, a section that is recessed or protruded, or a section that is not a round but a straight section within the entire circumference. In other words, the water inlet part 663 and water outlet part 664 may have various cross-sectional shapes in which the major axis and the minor axis intersect each other and may have directionality.

Meanwhile, the rotation protrusion 669 and the rotation groove 5329 are coupled to each other so that torque for rotating the housing 600 can be generated while the filter cover 66 is fixed. Therefore, the rotation protrusion 669 and the rotation groove 5329 can minimize the movement of the water inlet part 663 and the water outlet part 664 when the housing 600 rotates. In addition, by coupling the sensing member 668 and the sensing groove 5327, the filter cover 66 can be maintained in a more firmly fixed state to the head inner 53, and stable coupling of the water inlet part 663 and the water outlet part 664 can be guaranteed.

Below, the filter cover 66 will be described in more detail with reference to the drawings.

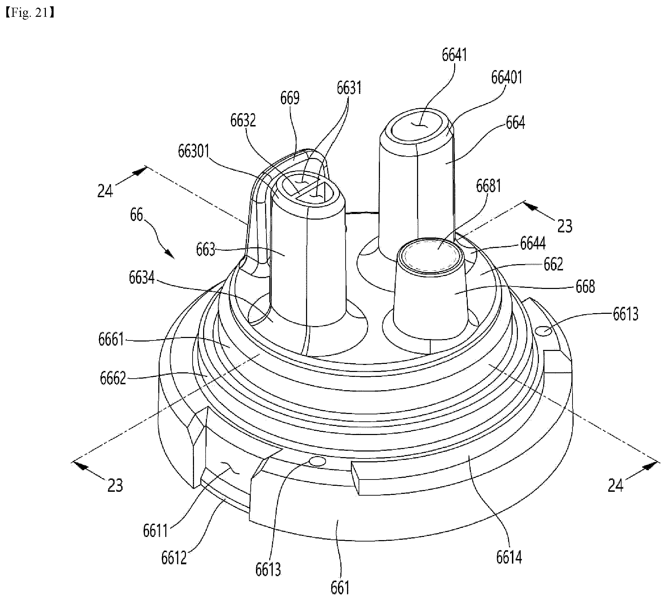

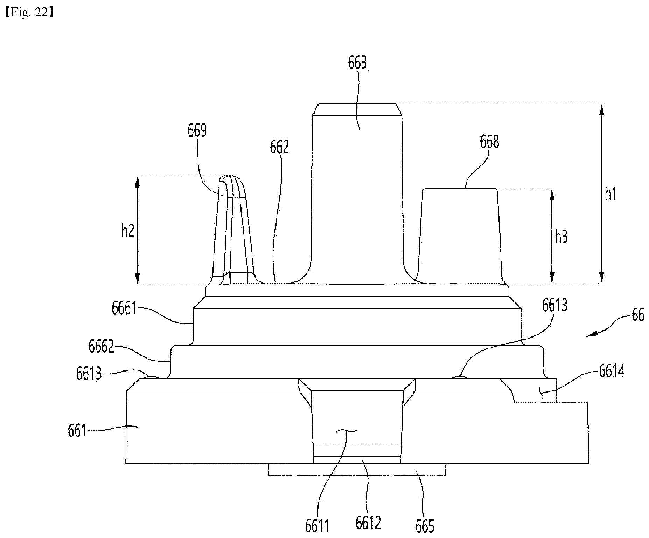

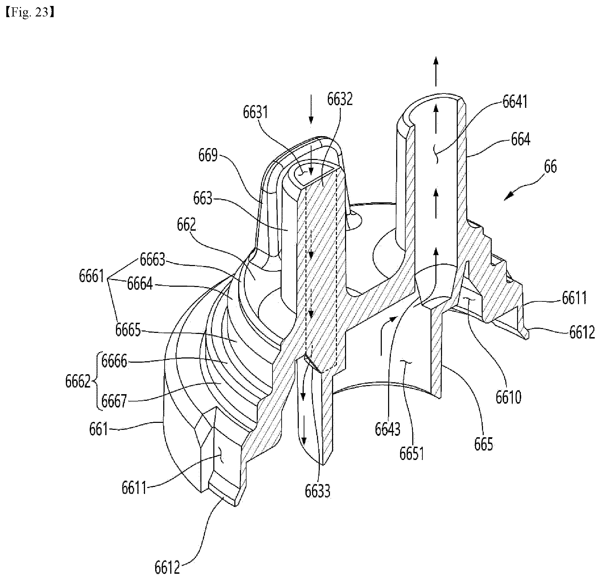

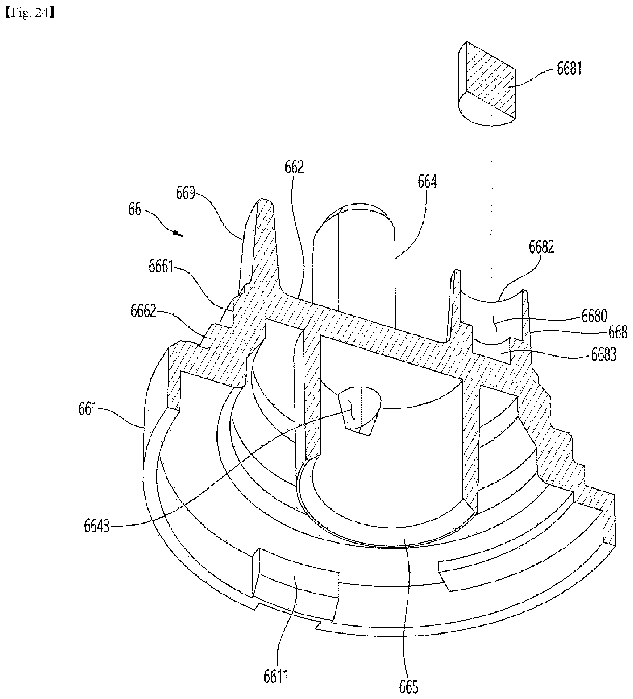

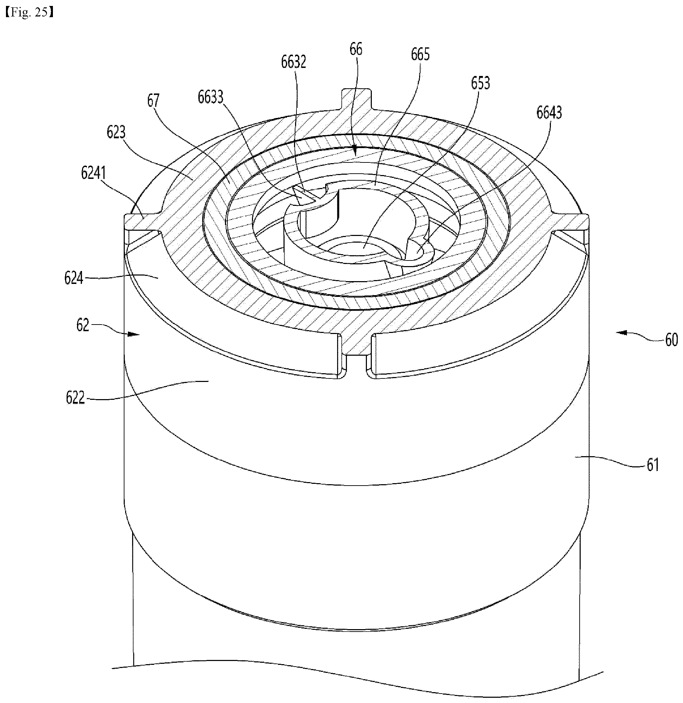

FIG. 21 is a perspective view illustrating the filter cover of the filter as seen from above, FIG. 22 is a side view illustrating the filter cover, FIG. 23 is a perspective view taken along line 23-23 of FIG. 21, FIG. 24 is a perspective view taken along line 24-24 of FIG. 21, and FIG. 25 is a perspective view taken along line 25-25 of FIG. 4.

As illustrated, the filter cover 66 may be formed with an open lower surface and a circular shape when viewed from above. An inner edge 661 may be formed at the lower end of the filter cover 66. The inner edge 661 may be in contact with the inner surface of the upper housing 62.

In addition, an edge groove 6611 and an edge hook 6612 may be formed on the inner edge 661. The edge groove 6611 may extend from the lower end to the upper end of the inner edge 661. In addition, the edge groove 6611 may be formed at a position corresponding to the support protrusion 6211, and may be formed so that the support protrusion 6211 passes through it.

The edge hook 6612 may be formed at the lower end of the edge groove 6611. The edge hook 6612 may be formed to be inclined so that the support protrusion 6211 may easily pass through. The edge grooves 6611 may be formed on opposite sides facing each other, and may be formed to have different sizes so that the support protrusion 6211 of a corresponding size may be inserted. Accordingly, the filter cover 66 is prevented from being assembled incorrectly, and may be assembled in the correct direction within the housing 600.

In addition, the support protrusion 6211 can support the lower end of the filter cover 66 after passing through the edge groove 6611 and the edge hook 6612. In addition, the filter cover 66 can be maintained in a state of being fixedly mounted to the upper housing 62. In addition, when the housing 600 rotates, the support protrusion 6211 can move along the lower end of the inner edge 661.

In addition, a stepped part 666 having a smaller diameter than the inner edge 661 may protrude upward from the upper end of the inner edge 661. A limit groove 6614 into which the limit protrusion 629 is inserted may be formed between the inner edge 661 and the stepped part 666.

The limit groove 6614 may extend along the upper end of the inner edge 661. The limit groove 6614 may be opened upward. Accordingly, when the filter cover 66 is inserted upward from the lower part of the upper housing 62, the limit protrusion 629 may be inserted into the inner side of the limit groove 6614. In addition, one end of the limit groove 6614 may come into contact with the limit protrusion 629 when the housing 600 is not rotated before mounting the filter 60. In addition, the other end of the limit groove 6614 may come into contact with the limit protrusion 629 when the housing 600 is completely rotated when mounting the filter 60.

In other words, as the housing 600 rotates, the limiting protrusion 629 can contact both ends of the limiting groove 6614 so that the housing 600 can rotate by a set angle. For example, the set angle can be approximately 90°. To this end, the limiting groove 6614 can have a set length and can be formed so that the housing 600 can rotate by 90°. In addition, the limiting groove 6614 can be formed on one side of the filter cover 66 corresponding to the limiting protrusion 629, not on the inner edge 661.

Meanwhile, a contact protrusion 6613 may be formed on the upper surface of the inner edge 661. A plurality of the contact protrusions 6613 may be formed along the inner edge 661. For example, three or four of the contact protrusions 6613 may be spaced apart from each other by a certain distance. In addition, the contact protrusions 6613 may be in contact with the inner surface of the upper housing 62. Accordingly, the outer surface of the filter cover 66 and the inner surface of the upper housing 62 may not be in contact with each other entirely, but may be in partial contact with each other. Accordingly, the upper housing 62 can rotate in a state where friction with the stationary filter cover 66 is minimized, and smooth rotation operation can be ensured. In addition, due to the vertically separated gap between the upper housing 62 and the filter cover 66 by the contact protrusion 6613, the support protrusion 6211 can be easily caught and restrained by the edge hook 6612.

The stepped part 666 may be configured in multiple steps and may have a shape corresponding to the protruding and recessed shapes of the inner surface of the upper housing 62. For example, the stepped part 666 may include a second stepped part 6662 at the upper end of the inner edge 661 and a first stepped part 6661 at the upper end of the second stepped part 6662. In addition, the seal ring 67 may be seated between the first stepped part 6661 and the second stepped part 6662. In addition, the first stepped part 6661 may shield the upper opening 6270 of the first protrusion part 627.

Above the first step part 6661, a cover upper surface 662 exposed through the upper opening 6270 may be formed. The cover upper surface 662 may be formed in a circular shape corresponding to the upper opening 6270. In addition, the cover upper surface 662 may form the same plane as the upper surface of the first protrusion part 627. As another example, the cover upper surface 662 may be formed in a curved or inclined shape having a high center and low edges.

In addition, a water inlet part 663 and a water outlet part 664 may be formed on the upper surface 662 of the cover. The water inlet part 663 and the water outlet part 664 may be spaced apart from each other at positions facing each other, and may be formed at the same height h1. The water inlet part 663 and the water outlet part 664 may be referred to as an inlet nipple and an outlet nipple due to their protruding shapes. A rotation protrusion 669 and a sensing member 668 may be protruded upward on the upper surface 662 of the cover. The rotation protrusion 669 and the sensing member 668 may be disposed in a direction intersecting with the disposition direction of the water inlet part 663 and the water outlet part 664.

The rotation protrusion 669 fixes the filter cover 66 so that the filter cover 66 remains fixed to the head inner 53 when the filter 60 is coupled to the head 50, and only the housing 600 can be rotated. In addition, the water inlet part 663 and the water outlet part 664 can be prevented from moving due to the torque generated when the housing 600 is rotated.

The sensing member 668 can be detected by the filter sensing device 55 when the filter 60 is coupled to the head 50. When the filter sensing device 55 senses the sensing member 668, it can be determined that the filter 60 is correctly mounted, and the water supply valve 102 can be opened. In other words, when the filter 60 is not mounted or is incorrectly mounted, the water supply valve 102 is kept closed to prevent water leakage.

The sensing member 668 may extend upward from the upper surface 662 of the cover. The protrusion height H3 of the sensing member 668 may be formed lower than the water inlet part and the water outlet part 664. In addition, when the filter 60 is completely coupled, the upper end of the sensing member 668 may extend to a position adjacent to the lower end of the sensing part 552. At this time, the upper end of the sensing member 668 is positioned lower than the hole edge 53271 and does not come into contact with the sensing part 552.

In addition, when the filter is inserted into the head 50, the water inlet part 663 and the water outlet part 664 may be first inserted into the inlet hole 5321 and the outlet hole 5323, and then the sensing member 668 may be inserted into the sensing hole 5327. In addition, the upper end of the sensing member 668 may be positioned at a height detectable by the sensing part 552 in a state where the water inlet part 663 and the water outlet part 664 are fully inserted. When the sensing member 668 is sensed by the sensing part 552, the water supply valve 102 may be opened. In addition, when the filter 60 is separated, the upper end of the sensing member 668 moves away from the sensing part 552, so that the water supply valve 102 is closed. Therefore, during the attached or detached process of the filter 60, water leakage due to opening of the water supply valve 102 can be fundamentally blocked.

Meanwhile, the sensing member 668 may have a protrusion opening 6682 formed on the upper surface and an accommodation part 6680 recessed downward. In addition, a magnet 6681 may be inserted into the accommodation part 6680. The magnet 6681 may be formed to correspond to the size of the accommodation part 6680 and may be pressed through the protrusion opening 6682 and may shield the protrusion opening 6682. Accordingly, the upper surface of the sensing member 668 may be formed by the magnet 6681. The height of the upper end of the sensing member 668 may correspond to the height of the upper surface of the magnet 6681, and the upper surface of the magnet 6681 may be formed in a flat shape.

In addition, when the filter 60 is completely coupled to the head 50, the magnet 6681 becomes adjacent to the sensing part 552. For example, the filter sensing device 55 may be configured as a Hall sensor that senses a change in the magnetic field caused by the magnet 6681. Therefore, when the filter 60 is inserted and the magnet becomes close to the sensing part 552, the filter sensing device 55 can determine whether the filter 60 is mounted. At this time, it is possible to determine whether the filter 60 is mounted without direct contact with the sensing member 668.

In addition, an accommodation part groove 66801 may be further formed on the bottom of the accommodation part 6680. The accommodation part groove 66801 may allow a part of the bottom of the accommodation part 6680 to be recessed. Accordingly, deformation of the accommodation part 6680 portion during injection molding of the filter cover 666 can be prevented, and the accommodation part 6680 can be molded to an accurate dimension. In addition, the circumference of the accommodation part groove 66801 can support the magnet 6681 from below.

As another example, the magnet 6681 may be provided in a form that is adhered to the upper end of the sensing member 668. In addition, the magnet 6681 may be inserted and mounted on the lower side of the water inlet part 663 other than the upper surface of the sensing member 668.

The height h2 of the rotation protrusion 669 and the height h3 of the sensing member 668 can be formed lower than the height h1 of the water inlet part 663 and the water outlet part 664. Therefore, when the filter 60 is mounted on the head 50, the water inlet part 663 and the water outlet part 664 can be first inserted into the inlet hole 5321 and the outlet hole 5323, and while the insertion of the water inlet part 663 and the water outlet part 664 is in progress, the rotation protrusion 669 and the sensing member 668 can be inserted into the rotation groove 5329 and the sensing hole 5327. In other words, by forming the height H1 of the water inlet part 663 and the water outlet part 664 higher, it is possible to couple the water inlet part 663 and water outlet part 664 with the head inner 53 without interference from other components 668, 669 when inserting and mounting them.

An inlet inclined part 66301 and an outlet inclined part 66401 may be formed at the upper end of the water inlet part 663 and the upper end of the water outlet part 664, respectively. The inlet inclined part 66301 and the outlet inclined part 66401 may be formed so that their diameters become narrower as they go upward. Accordingly, the water inlet part 663 and the water outlet part 664 may be more easily inserted into the inlet hole 5321 and the outlet hole 5323. In addition, the inlet ring 541 and the outlet ring 542 may be prevented from being damaged during the process of inserting the water inlet part 663 and the water outlet part 664 into the inlet hole 5321 and the outlet hole 5323.

In particular, inclined surfaces 5322, 5324 may be formed on the opened circumference of the inlet hole 5321 and the outlet hole 5323, and when the filter 60 is mounted, the inlet inclined part 66301 and the inclined surface 5322 of the inlet hole 5321 come into contact with each other, and the outlet inclined part 66401 and the inclined surface 5324 of the outlet hole 5323 come into contact with each other. Accordingly, even when the water inlet part 663 and water outlet part 664 are not precisely aligned with the inlet hole 5231 and outlet hole 5323, the filter 60 can be naturally inserted into the inlet hole 5321 and outlet hole 5323 of the water inlet part 663 and water outlet part 664 by the contact and guidance of the inclined parts 66301, 66401 and inclined surfaces 5322, 5324. For example, when the filter 60 is rotated by a set angle (for example, approximately 20°) based on the aligned state, the inclined parts 66301, 66401 and inclined surfaces 5322, 5324 can be aligned so that the filter 60 can be inserted into the inlet hole 5321 and outlet hole 5323 of the water inlet part 663 and water outlet part 664 by contacting each other. This structure may be very effective in the coupling between the water inlet part 663 and the water outlet part 664 and the inlet hole 5321 and the outlet hole 5323 having an elliptical cross-sectional structure facing in different directions.

The filter cover 66 may include a nipple accommodation part 665. The nipple accommodation part 665 may extend downward from the inner upper surface 662. The nipple accommodation part 665 may be positioned on the center line of the filter cover 66. In addition, the nipple accommodation part 665 may be formed in a cylindrical shape with an open lower surface to form a second space 6651 into which the filter nipple 653 is inserted.

The nipple accommodation part 665 may be formed in a shape corresponding to the outer diameter of the nipple seal ring 6533. In addition, the outer end of the nipple accommodation part 665 may be in contact with the lower end of the water inlet part 663 and the lower end of the water outlet part 664, respectively. By the nipple accommodation part 665, the interior of the filter cover 66 may be divided into a first space 6610 into which water flows in through the water inlet part 663 and a second space 6651 into which purified water is discharged toward the water outlet part 664.

In detail, the water inlet part 663 may be communicated with the first space 6610. The lower end of the water inlet part 663 may form an inlet exit 6633 that communicates with the first space 6610.

In addition, an inlet contact part 6632 may be formed inside the water inlet part 663 to divide the inlet flow path 6631 inside the water inlet part 663. The inlet contact part 6632 may extend from the upper end of the water inlet part 663 to the inlet exit 6633. In addition, the inlet contact part 6632 may be formed along the minor axis S1 of the elliptical cross-section of the water inlet part 663.

Accordingly, water flowing in through the flow path space S on both sides of the sheet part 5631 can more effectively pass through the water inlet part 663 and head toward the first space 6610. In addition, the upper end of the inlet contact part 6632 can come into contact with the contact part 5633 of the valve 56.

In detail, the water inlet part 663 may be formed in an elliptical shape and formed so that the major axis L1 extends in the front and rear direction. When the inlet exit 6633 of the water inlet part 663 is formed at a position close to the lateral stepped parts 6661, 6662 so that the major axis L1 is disposed in the front and rear direction, the size of the inlet exit 6633 is secured and smooth water inflow through the water inlet part 663 is enabled.

In addition, the direction of the major axis L1 of the water inlet part 663 may correspond to the cross-sectional shape of the flow path formed in the valve 56 so that water supplied through the valve 56 may flow smoothly along the water inlet part 663.

In addition, when the inlet contact part 6632 is disposed in the direction of the major axis L1 of the water inlet part 663, a part of the inlet exit 6633 side is blocked, making it impossible for water to flow uniformly through the water inlet flow path 6631 divided by the inlet contact part. Therefore, the inlet contact part 6632 is disposed in the direction of the minor axis S1 of the water inlet part 663 so that the inlet exit 6633 side is completely open, making it possible for water to flow uniformly through the water inlet flow path 6631.

As another example, the inlet contact part 6632 may be formed at the upper end of the water inlet part 663, but may be partially formed inside the water inlet part 663. The inlet contact part 6632 may also be formed only at the upper end of the water inlet part 663 or the upper part of the water inlet part 663 that can come into contact with the contact part 5633.

As another example, the inlet contact part 6632 may be formed in a cross shape with a plurality of ribs intersecting when viewed from above to support the contact part 5633 more stably.

The water outlet part 664 may communicate with the second space 6651. The lower end of the water outlet part 664 may form an outlet entrance 6643 communicating with the second space 6651. In addition, a water outlet flow path 6641 may be formed inside the water outlet part 664. The cross-sectional shape of the water outlet flow path 6641 may be formed in an elliptical shape, and may be disposed in a direction intersecting with the cross-sectional shape of the water inlet flow path 6631.

In addition, the lower ends of the water inlet part 663 and water outlet part 664 may be formed with inclined parts 6634, 6644 that are formed to have an incline or round from the cover upper surface 662, respectively. The inclined parts 6634, 6644 may be formed in a shape corresponding to the inclined parts 5322, 5324. The inclined parts 6634, 6644 may reinforce the strength of the water inlet part 663 and water outlet part 664 to prevent deformation and damage. In addition, when the water inlet part 663 and the water outlet part 664 are inserted into the inlet hole 5321 and outlet hole 5323, the inclined parts 6634, 6644 may be adjacent to the inclined parts 5322, 5324.

Below, the coupling structure of the upper housing 62 and the filter cover 66 is described in more detail with reference to the drawings.

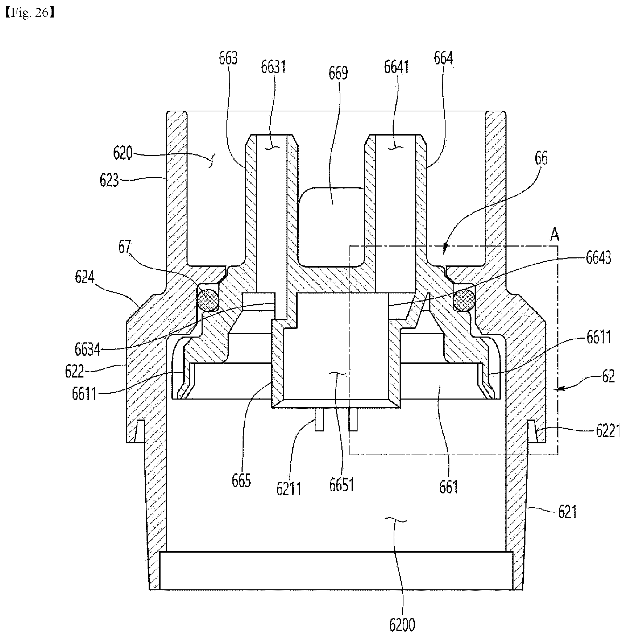

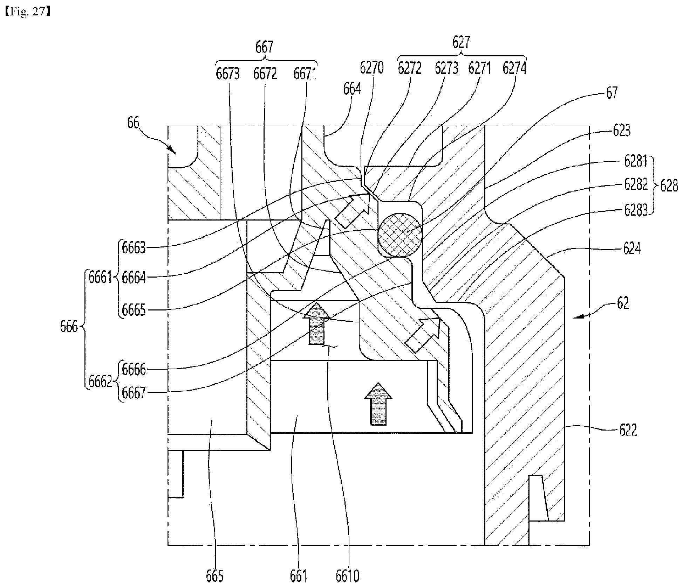

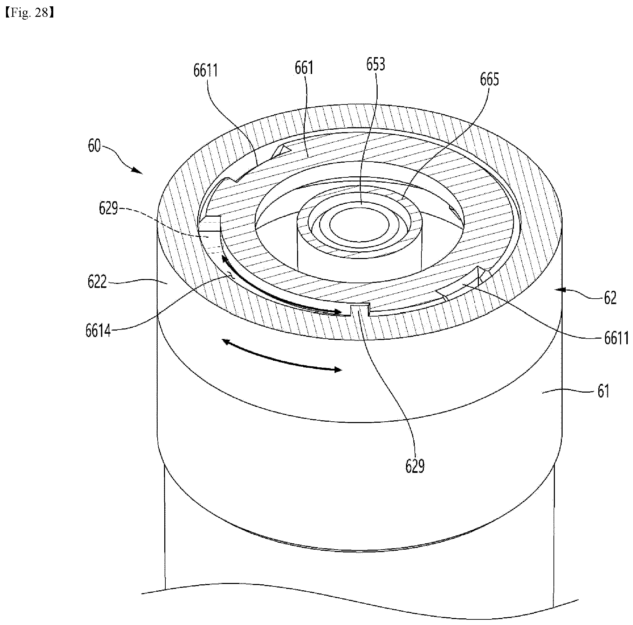

FIG. 26 is a longitudinal cross-sectional view illustrating a state where the upper housing and filter cover are combined, FIG. 27 is an enlarged view illustrating part A of FIG. 26, and FIG. 28 is a perspective view taken along line 28-28 of FIG. 4.

As illustrated, the filter cover 66 is inserted into the opened lower part of the upper housing 62 and can be mounted to shield the upper opening 6270. When the filter cover 66 is mounted on the upper housing 62, the water inlet part 663 and the water outlet part 664 can be exposed to the opened upper surface of the upper housing 62. Then, when the filter 60 is mounted, the water inlet part 663 and the water outlet part 664 which are exposed can be inserted into the inlet hole 5321 and the outlet hole 5323.

The filter cover 66 can be supported from below by the support protrusion 6211 while inserted into the upper housing 62. Therefore, the filter cover 66 can be maintained in a mounted state without being separated from the upper housing 62.

The outer surface of the filter cover 66 formed in steps and the inner surface of the upper housing 62 can be disposed to correspond to each other. In addition, the filter cover 66 and the upper housing 62 can be rotated relative to each other while maintaining sealed state by the seal ring 67.

In detail, the upper housing 62 may have a first protrusion part 627 protruding toward the inside of the upper housing 62, and a second protrusion part 628 protruding from the lower end of the first protrusion part 627 toward the center of the upper housing 62. The first protrusion part 627 may protrude toward the center of the upper housing 62 more than the second protrusion part 628. In addition, the first protrusion part 627 and the second protrusion part 628 may be formed to be stepped from each other. In addition, the seal ring 67 may be disposed on the stepped part of the first protrusion part 627 and the second protrusion part 628.

For example, the first protrusion part 627 may include a first inner surface 6271 forming an upper surface of the first protrusion part 627, a second inner surface 6272 extending downward from an inner end of the first inner surface 6271 and forming the upper opening 6270, a third inner surface 6273 formed to be inclined at a lower end of the second inner surface 6272, and a fourth inner surface 6274 formed parallel to the second inner surface 6272 at an end part of the third inner surface 6273 and forming a lower surface of the first protrusion part 627.

In addition, the second protrusion part 628 may include a fifth inner surface 6281 forming an inner surface of the second protrusion part 628, a sixth inner surface 6282 formed to be inclined at the lower end of the fifth inner surface 6281, and a seventh inner surface 6283 extending from the lower end of the sixth inner surface 6282 to form the lower surface of the second protrusion part 628.

The seal ring 67 is formed in an O-ring shape and can be positioned to come into contact with the fourth inner surface 6274 and the fifth inner surface 6281. In particular, even when the upper housing 62 rotates, the upward and outward flow of the seal ring 67 is restricted so that the position of the seal ring 67 can be maintained and the seal ring between the upper housing 62 and the filter cover 66 can be maintained.

The inner edge 661 at the lower end of the filter cover 66 may be positioned below the second protrusion part 628, that is, the seventh inner surface 6283, and may be positioned further outside than the fifth inner surface 6281. Accordingly, the filter cover 66 may be restrained from upward flow below the second protrusion part 628 by the inner edge 661. At this time, the contact protrusion 6613 formed on the upper surface of the inner edge 661 may come into contact with the seventh inner surface 6283 to facilitate the rotation of the upper housing 62.

In addition, the first stepped part 6661 and the second stepped part 6662 may be formed above the inner edge 661. The first stepped part 6661 and the second stepped part 6662 may be configured to be in contact with the first protrusion part 627 and the second protrusion part 628, respectively.

For example, the first stepped part 6661 may include a first outer surface 6663 facing the second inner surface 6272, a second outer surface 6664 extending obliquely from the lower end of the first outer surface 6663 and facing the third inner surface 6273, and a third outer surface 6665 extending downwardly from the lower end of the second outer surface 6664 and facing the fifth inner surface 6281. At this time, the second outer surface 6664 and the fifth inner surface 6281 may be spaced apart from each other in the left and right direction, and the seal ring 67 may be disposed between the second outer surface 6664 and the fifth inner surface 6281.

In addition, the second stepped part 6662 may include a fourth outer surface 6666 extending from the lower end of the third outer surface 6665 and facing the fourth inner surface 6274. The fourth inner surface 6274 and the fourth outer surface 6666 may be spaced apart from each other in the vertical direction, and the seal ring 67 may be disposed therebetween. In addition, the second stepped part 6662 may include a fifth outer surface 6667 extending downward from an end part of the fourth outer surface 6666. The fifth outer surface 6667 may face the fifth inner surface 6281 and may extend downward to a height corresponding to the seventh inner surface 6283.

Meanwhile, the seal ring 67 is supported in the front, rear, left, and right directions by the first protrusion part 627 and the second protrusion part 628 and the first stepped part 6661 and the second stepped part 6662, and thus can seal the space between the filter cover 66 and the upper housing 62 to prevent water leakage. In addition, the first protrusion part 627 and the second protrusion part 628 may be adjacent to the first stepped part 6661 and the second stepped part 6662 by the seal ring 67, but may not be in direct contact with each other, and thus the upper housing 62 may be rotatable.

In addition, the circumferential surface of the filter cover 66 in which the inner edge 661 and the first stepped part 6661 and the second stepped part 6662 are formed can be pressed toward the inner surface of the housing 600 by the hydraulic pressure of the second space 6651 inside the housing 600, thereby enabling the seal ring between the upper housing 62 and the filter cover 66 to be more effectively achieved.

In particular, the inner surface 667 of the filter cover 66 forming the second space 6651 may include an inner inclined surface 6672. The inner inclined surface 6672 may be formed at a position facing the seal ring 67. In addition, the inner inclined surface 6672 may be disposed so that it faces outward as it extends downward. At this time, a normal line intersecting the inner inclined surface 6672 may be formed so as to pass through the center of the seal ring 67. Therefore, when water is supplied to the filter 60 and the pressure inside the housing 600, particularly, the second space 6651, increases, the inner inclined surface 6672 presses the seal ring 67 outward, and the gap between the filter cover 66 and the upper housing 62 is reduced, so that the seal ring may be more airtight.

The inner surface of the filter cover 66 may further include a first vertical surface 6671 extending upward from the upper end of the inner inclined surface 6672 and a second vertical surface 6673 extending downward from the lower end of the inner inclined surface 6672. The first vertical surface 6671 and the second vertical surface 6672 may be formed perpendicular to the upper surface of the filter cover 66.

Below, the mounting process of a filter 60 having the structure is described with reference to the drawings.

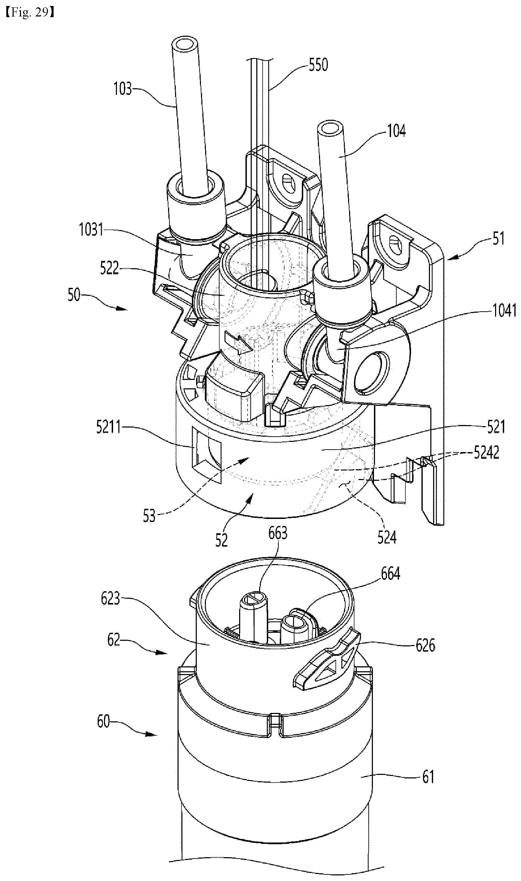

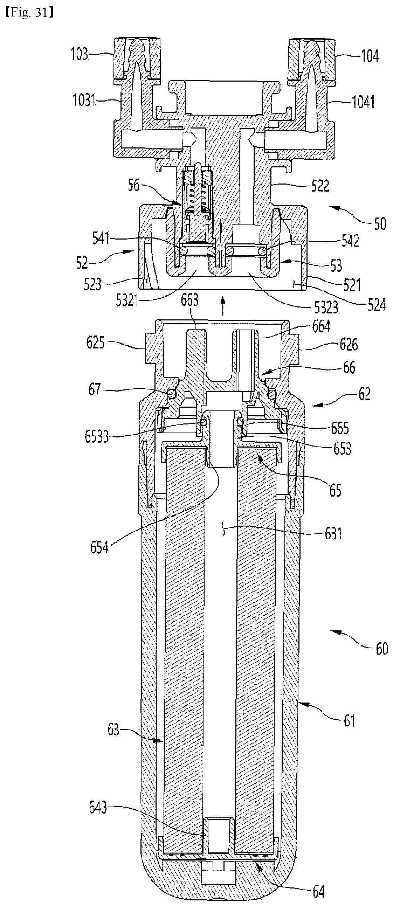

FIG. 29 is an exploded perspective view illustrating a state of being aligned for coupling the filters as seen from one side, FIG. 30 is an exploded perspective view illustrating a state of being aligned for coupling the filters as seen from the other side, and FIG. 31 is a longitudinal cross-sectional view illustrating a state where the head and filter are separated.

As illustrated, the upper end of the filter 60 may be inserted through the open lower surface of the head 50.

The filter 60 has a structure in which the housing 600 rotates relative to the filter cover 66 and is coupled to the head body 52. Therefore, in order to properly mount the filter 60, the water inlet part 663 and water outlet part 664 have to be aligned with the inside of the housing 600.

When the filter 60 is viewed from above, the water inlet part 663 and the water outlet part 664 can be aligned between the first guide protrusion 625 and the second guide protrusion 626 disposed on both sides. In detail, the water inlet part 663 and the water outlet part 664 can be disposed in parallel on an extension line connecting the first guide protrusion 625 and the second guide protrusion 626. Therefore, the user can easily visually check that the filter 60 is aligned so that it can be mounted on the head 50 when viewed from above.

In particular, when the filter 60 is aligned to be mounted on the head, the water inlet part 663 and the water outlet part 664 can be aligned with the marker 6275 formed on the outside of the upper opening 6270. In addition, the marker 6275 can be positioned on the same line as the minor axis of the water inlet part 663 or the inlet contact part 6632 of the water inlet part 663. Therefore, the user can more accurately know the alignment state of the filter 60 through the disposition of the marker 6275 and the inlet contact part 6632.

In addition, the markers 6275 can be formed on both left and right sides and also on the upper and lower sides, and the markers 6275 on both left and right sides can visualize the alignment state of the water inlet part 663 and the water outlet part 664, and the markers 6275 on both upper and lower sides can visualize the alignment state of the rotation protrusion 669 and the sensing member 668. Therefore, the alignment state of the filter 60 can be accurately checked through the disposition of the markers 6275 exposed to the upper surface of the filter 60 and the water inlet part 663, the water outlet part 664, the rotation protrusion 669, and the sensing member 668.

If the water inlet part 663 and water outlet part 664 are not aligned before the filter 60 is mounted on the head 50, the user can align them as above by rotating the filter cover 66 relative to the housing 600.

In a state where the filter 60 is aligned, the first guide protrusion 625 and the second guide protrusion 626 can be positioned on the left and right sides, respectively. Then, in order to couple the filter 60 to the head, the user can position the first guide protrusion 625 and the second guide protrusion 626 downwardly corresponding to the first guide hole 5231 and the second guide hole 5241 opened in the lower surface of the head body 52, respectively. At this time, the water inlet part 663 and the water outlet part 664 aligned with the filter 60 can be positioned downwardly of the inlet hole 5321 and the outlet hole 5323.

In addition, when the filter 60 is aligned, the sensing member 668 can be positioned below the sensing hole 5327. In addition, the rotary protrusion 669 can be positioned below the rotation groove 5329.

In this state, the filter 60 can be moved upward to begin coupling the filter 60 with the head 50.

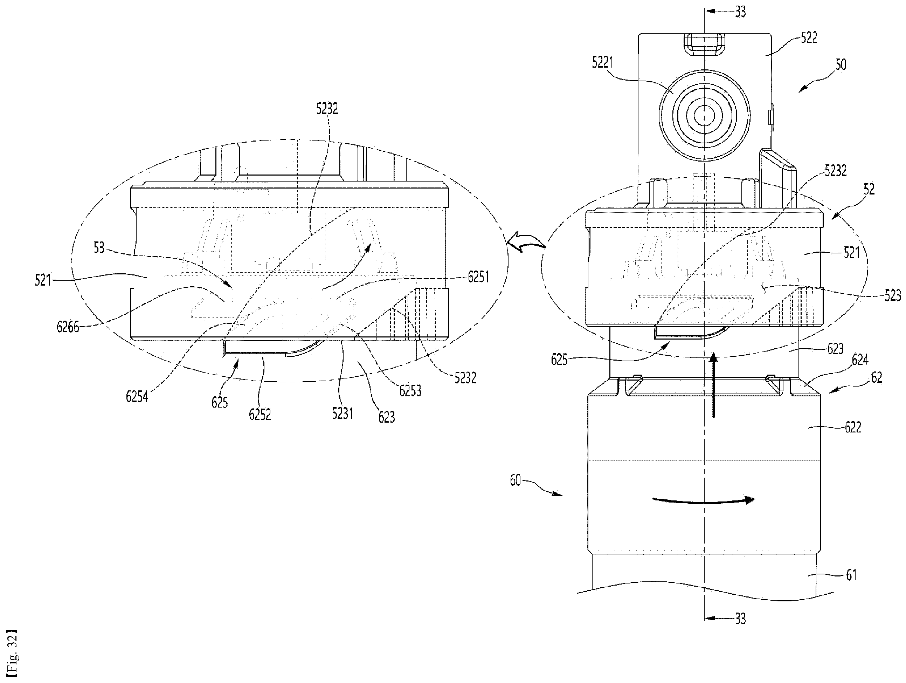

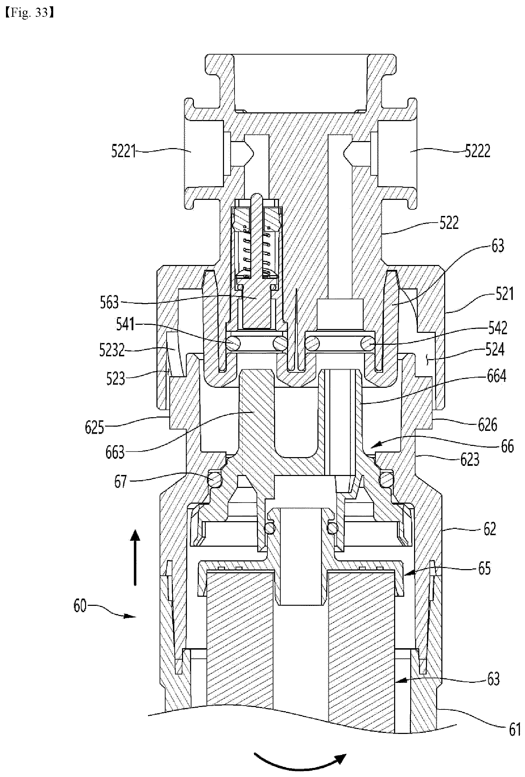

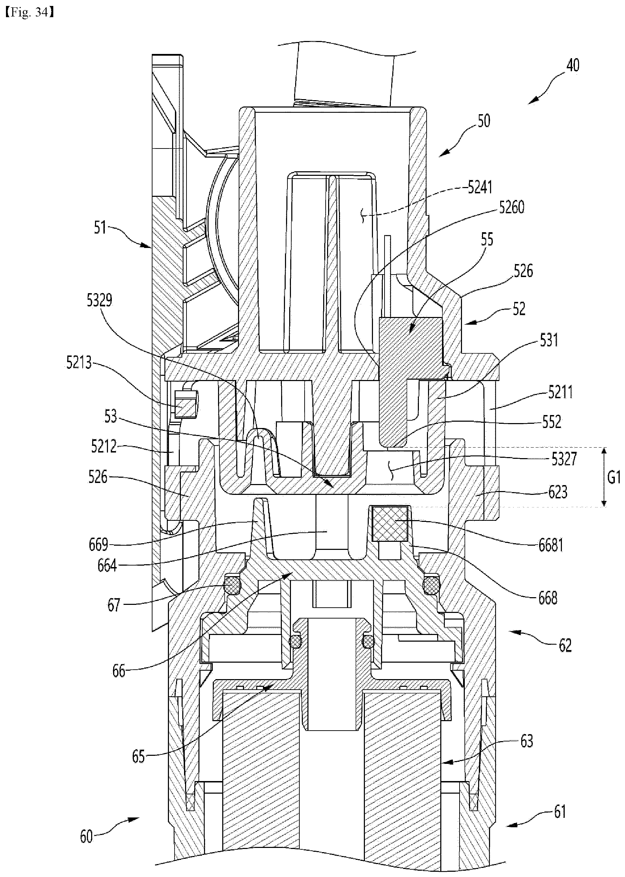

FIG. 32 is a view illustrating a state where the filter has started to be inserted into the head, FIG. 33 is a cross-sectional view taken along line 33-33 of FIG. 32, and FIG. 34 is a cross-sectional view illustrating the disposition of the sensing device and sensing member when the filter is started to be inserted into the head.

As illustrated, the upper end of the filter 60 can be inserted through the opened lower surface of the head body 52. When the filter 60 is started to be coupled to the head body 52, the first guide protrusion 625 can be inserted into the first guide 523, and the second guide protrusion 626 can be inserted into the second guide 524.

In particular, the first guide protrusion 625 is structurally prevented from being inserted into the second guide 524, thereby preventing incorrect mounting of the filter 60. In addition, the cross sections of the water inlet part 663 and the water outlet part 664 are also formed to have directionality to be inserted into the inlet hole 5321 and the outlet hole 5323 only when the first guide protrusion 625 is inserted into the first guide 523 and the second guide protrusion 626 is inserted into into the second guide 524.

In detail, when the first guide 523 is inserted into the interior of the first guide hole 5231 from below the first guide hole 5231, the protrusion extension part 6256 can be inserted through the gap G between the first guide part 5232 and the head inner 53.

In other words, the first guide protrusion 625 is inserted into the interior of the first guide 523, and the protrusion extension part 6256 can be inserted between the first guide part 5232 and the head inner 53. As the first guide protrusion 625 is inserted into the first guide 523, the first front inclined part 6253 or the first rear inclined part 6254 moves into contact with the first guide part 5232.

At this time, the second guide protrusion 626 can be inserted into the interior of the second guide 524. In other words, the first guide protrusion 625 and the second guide protrusion 626 can be simultaneously inserted and moved into the first guide 523 and the second guide 524.

Meanwhile, if the user incorrectly mounts the filter 60, the first guide protrusion 625 may be attempted to be inserted toward the second guide hole 5241. At this time, the protrusion extension part 6256 cannot be inserted into the relatively narrow gap between the second guide part 5242 and the head inner 53. Therefore, the first guide protrusion 625 cannot be inserted into the second guide 524. In other words, the filter 60 may have a structure in which it is mounted only in a set disposition, thereby ensuring accurate mounting of the water inlet part 663 and water outlet part 664.

In addition, the water inlet part 663 and the water outlet part 664 can be inserted into the corresponding inlet hole 5321 and the outlet hole 5323, respectively. The water inlet part 663 and the water outlet part 664 can be inserted into the inlet hole 5321 and the outlet hole 5323, respectively, at the moment when the first guide protrusion 625 and the second guide protrusion 626 are inserted into the first guide 523 and the second guide 524.

At this time, since the water inlet part 663 and water outlet part 664 are already aligned, accurate mounting is possible simply by inserting the first guide protrusion 625 and the second guide protrusion 626 into the first guide 523 and the second guide 524 without a separate alignment operation.

In addition, when the first guide protrusion 625 and the second guide protrusion 626 are inserted into the first guide 523 and the second guide 524, the sensing member 668 is not inserted into the sensing hole 5327.

Even when the water inlet part 663 and the water outlet part 664 are inserted into the inlet hole 5321 and outlet hole 5323, the sensing member 668 is relatively low in height and is positioned below the sensing hole 5327. At this time, the gap G1 between the upper end of the sensing member 668, that is, the magnet 6681 and the sensing part 552 may be a distance at which the sensing part 552 cannot sense the magnet 6681.

Therefore, in the initial stage where the filter 60 is coupled to the head 50, the sensing part 552 cannot detect the sensing member 668, that is, the magnet 6681, and thus the water supply valve 102 is maintained in the off state. In addition, since the water supply valve 102 is maintained in the closed state, it is possible to fundamentally prevent water leakage during the mounting process of the filter 60.

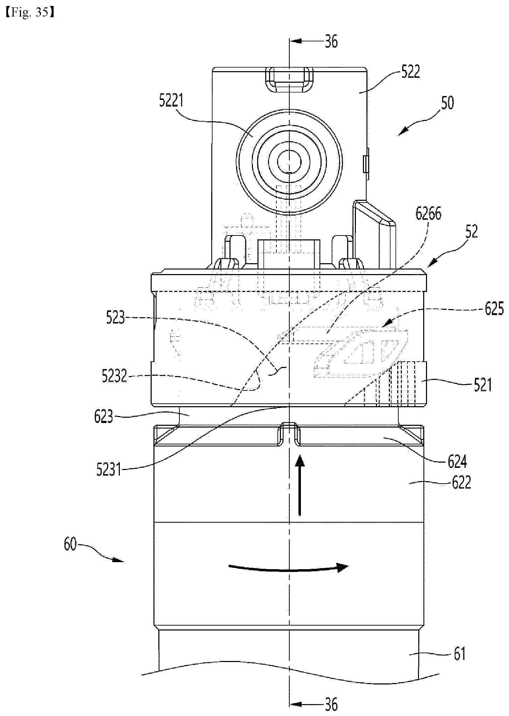

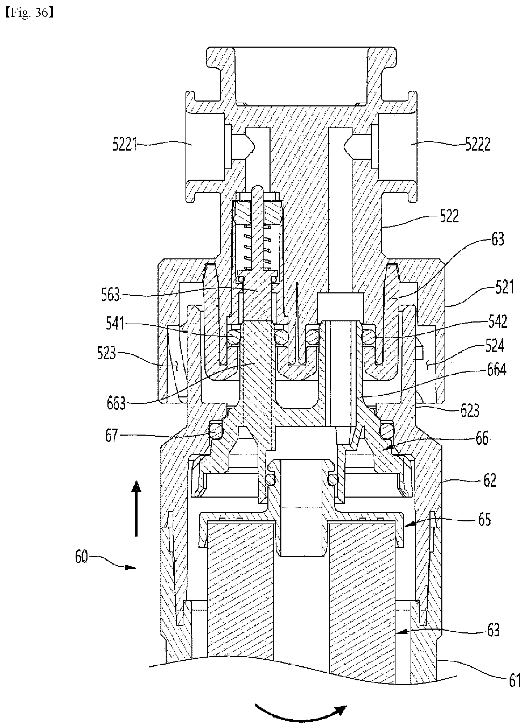

FIG. 35 is a view illustrating a state where the filter inserted into the head and rotated at a set angle, and FIG. 36 is a cross-sectional view taken along line 36-36 of FIG. 35.

As illustrated, the filter 60 can be rotated to be coupled with the head 50 while being inserted into the head 50. At this time, the housing 600 moves upward while rotating with respect to the filter cover 66, and the filter cover 66 can move upward while being coupled with the head inner 53.

In detail, as the housing 600 is rotated, the first guide protrusion 625 and the second guide protrusion 626 can move upward along the first guide 523 and the second guide 524, respectively. For example, the first front inclined part 6253 or the first rear inclined part 6254 can move while maintaining contact with the first guide part 5232. At this time, the protrusion extension part 6256 can move while being positioned at the gap (G) between the first guide part 5232 and the head inner 53.

As the housing 600 rotates, the first guide protrusion 625 and the second guide protrusion 626 continuously move along the first guide 523 and the second guide 524. In addition, the water inlet part 663 and the water outlet part 664 move upward and can be inserted into the inlet hole 5321 and the outlet hole 5323. The water inlet part 663 and the water outlet part 664 can move upward by passing through the inlet ring 541 and the outlet ring 542, respectively. Therefore, the circumference of the water inlet part 663 and the water outlet part 664 can be sealed by the inlet ring 541 and the outlet ring 542.

The housing 600 is rotated until the first guide protrusion 625 and the second guide protrusion 626 are positioned at the end parts of the first guide 523 and the second guide 524, and insertion of the water inlet part 663 and the water outlet part 664 can proceed.

In addition, the rotation protrusion 669 and the sensing member 668 may also be inserted into the inside of the rotation groove 5329 and the sensing hole 5327, respectively. At this time, the rotation protrusion 669 comes into contact with the inner surface of the rotation groove 5329, and thus, the torque generated when the housing 600 rotates is not transmitted to the water inlet part 663 and the water outlet part 664, thereby ensuring stable rotation of the housing 600.

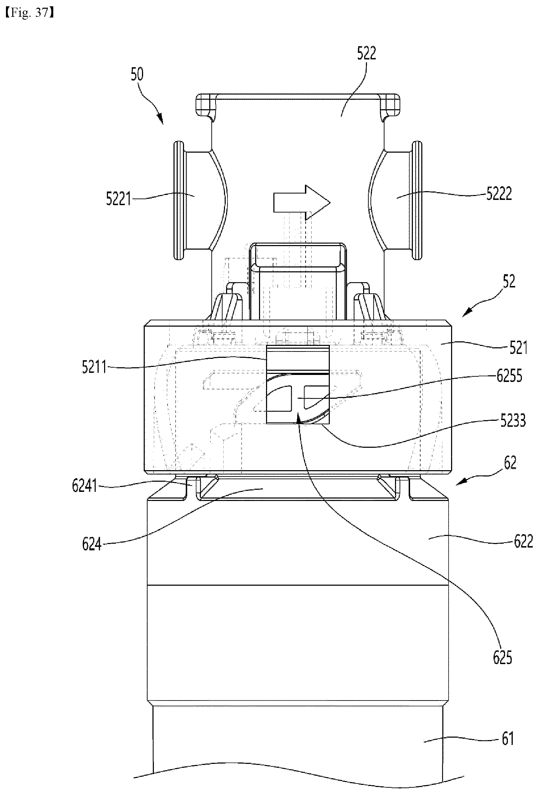

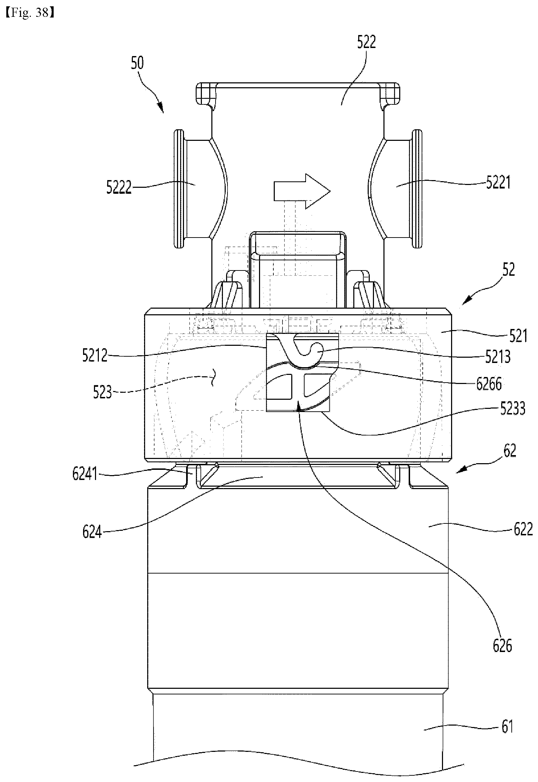

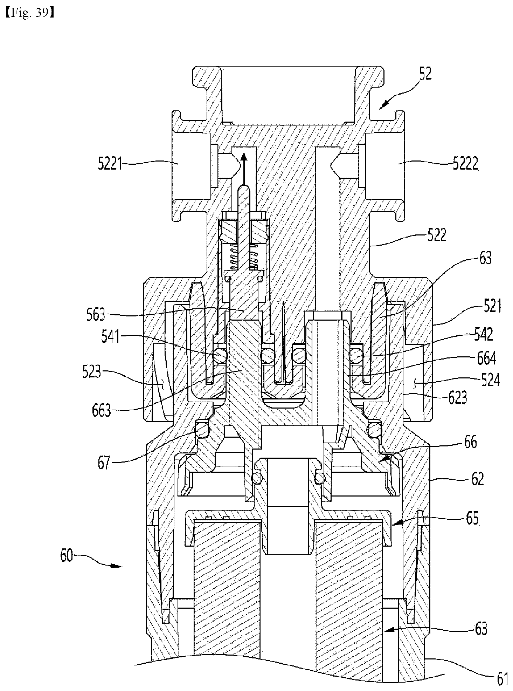

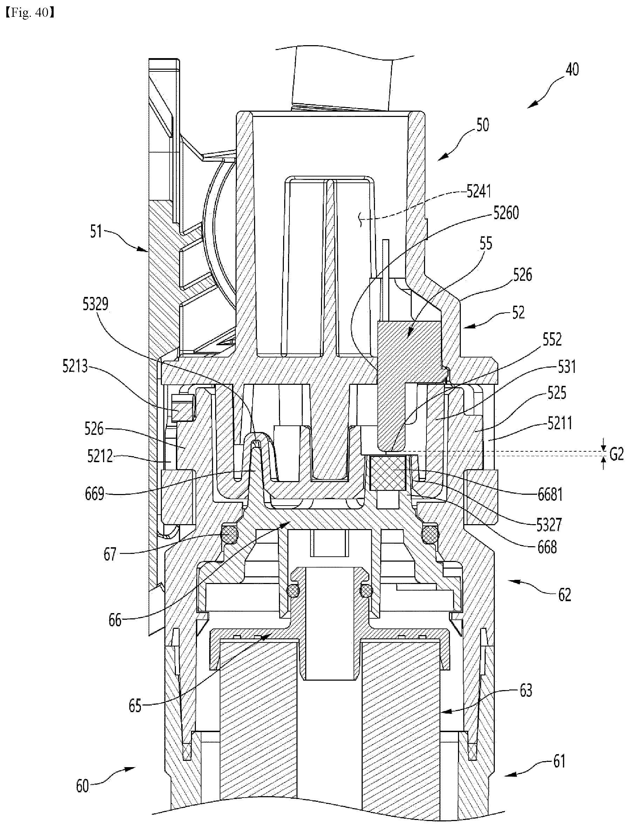

FIG. 37 is a front view illustrating a state where the filter is completely coupled to the head, FIG. 38 is a rear view illustrating a state where the filter is completely coupled to the head, FIG. 39 is a longitudinal cross-sectional view of FIG. 37, and FIG. 40 is a cross-sectional view illustrating the disposition of the sensing device and sensing member in a state where the filter is completely inserted into the head.

As illustrated, when the filter 60 is completely coupled to the head body 52, the first guide protrusion 625 can be positioned at the upper end of the first guide 523. At this time, the first guide protrusion 625 can be positioned within the check window 5211. The check window 5211 is opened forward, and the first guide protrusion 625 can be exposed forward through the check window 5211. Accordingly, the user can check that the connecting rib 6255 is positioned at the center of the check window 5211, and can visually check that the filter 60 is completely mounted on the head 50.

In addition, when the filter 60 is completely coupled to the head body 52, the second guide protrusion 626 can be positioned at the upper end of the second guide. In addition, the second guide protrusion 626 can be positioned within the rear check window 5212. At this time, the restraint part 5213 can be caught and restrained in the restraint groove 6266 of the second guide protrusion 626. The restraint part 5213 is formed in a ring-like shape and can be elastically deformed when coupled or separated from the restraint groove 6266, and can be press-coupled to the restraint groove 6266.

In detail, at the moment when the filter 60 is completely coupled to the head body 52, the restraint groove 6266 and the restraint part 5213 can be engaged with each other. Then, the user can determine whether the filter 60 is normally coupled to the head 50 through the engaging sound or vibration generated at this time. In other words, even if the user does not directly check the check window 5211 with the user's eyes, the user can determine whether the filter 60 is completely mounted by the engaging sound and engaging vibration generated when the housing 600 rotates.

In addition, when the filter 60 is coupled to the head body 52, the housing rib 6241 may be in contact with the lower end of the head body 52. Accordingly, the user can also determine whether the filter 60 is fully coupled through the gap between the housing rib 6241 and the head body 52.

Meanwhile, when the filter 60 is completely mounted on the head body 52, the water inlet part 663 and the water outlet part 664 can be inserted into the inlet hole 5321 and the outlet hole 5323 to a set depth.

In addition, when the water inlet part 663 and the water outlet part 664 are completely inserted into the inlet hole 5321 and the outlet hole 5323, the inside of the filter 60 and the inlet flow path 5241 and the outlet flow path 5251 of the head 50 can communicated with each other.

Meanwhile, when the filter 60 is completely coupled to the head 50, the sensing member 668 can be completely inserted into the inside of the sensing hole 5327. Then, the upper end of the sensing member 668, that is, the upper surface of the magnet 6681, can be positioned at the highest point past the inlet hole 5321. At this time, the upper end of the sensing member 668 can be inserted to a position corresponding to the upper end of the hole edge 53271.

In addition, when the sensing member 668 is fully inserted, the upper surface of the sensing member 668, that is, the magnet 6681, and can have a minimum gap G2 with the sensing part. At this time, the gap G2 between the magnet 6681 and the sensing part 552 is a gap at which the filter sensing device 55 can recognize the filter.

Accordingly, the filter sensing device 55 can recognize the completion of mounting of the filter through the change in the magnetic field of the magnet 6681. Then, when it recognizes that the filter 60 is completed mounted, the water supply valve 102 can be opened. By opening the water supply valve 102, water can be supplied to the filter assembly 40 through the water supply flow path 100, and water can be supplied to the filter 60 through the valve 56 in the open state.

Below, the water flow state of the filter assembly 40 with the filter 60 combined will be described in more detail with reference to the drawings.

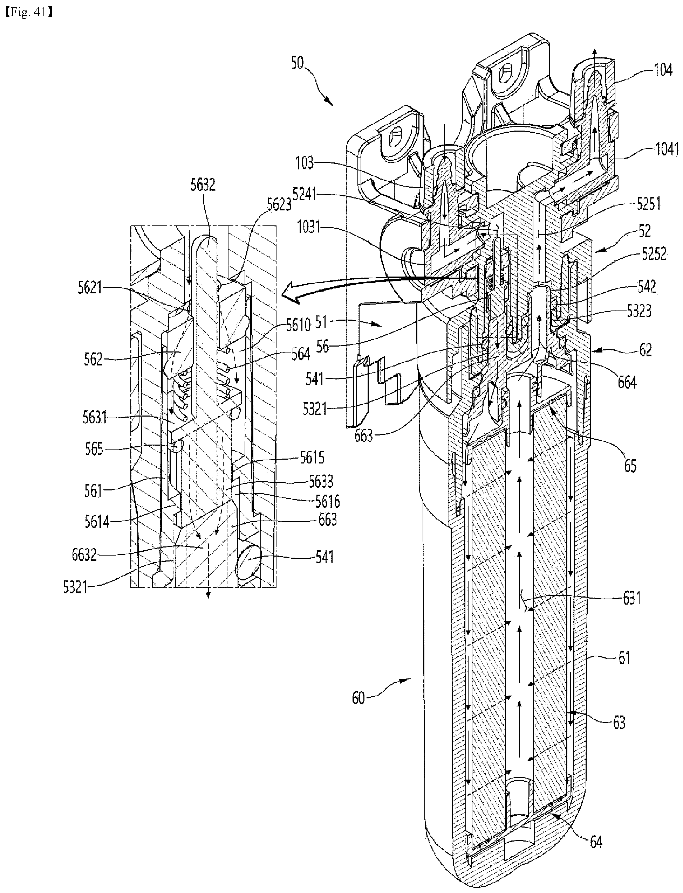

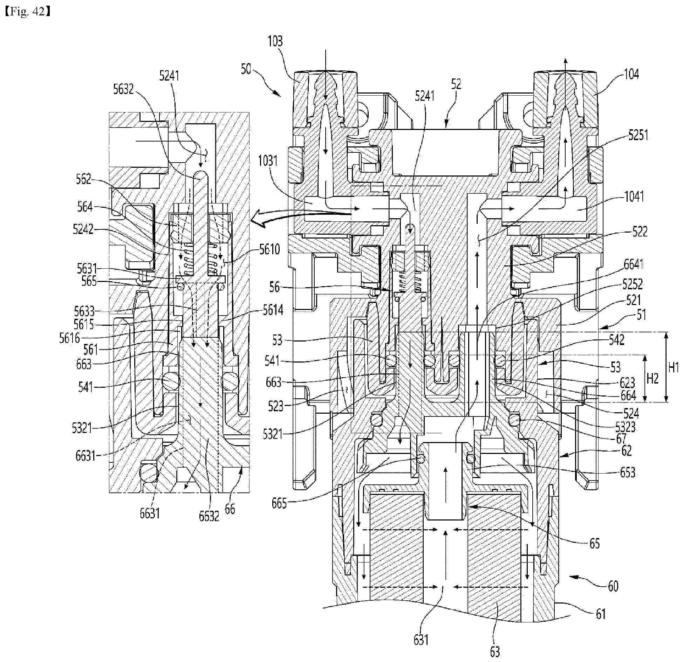

FIG. 41 is a view illustrating the water flow in a state where the filter is completely coupled to the head, and FIG. 42 is a cross-sectional view illustrating a state where the water inlet part and the water outlet part are connected when the filter is completely coupled to the head.

As illustrated, when the filter 60 is completely coupled to the head 50, the water inlet part 663 and the water outlet part 664 can be inserted into the inlet hole 5321 and the outlet hole 5323, respectively.

In detail, the upper end of the water inlet part 663 may be positioned further upward past the inlet ring 541. Then, the upper end of the water inlet part 663 may contact the contact part 5633 to move the piston 563 upward to open the case passage 5615.

Water supplied through the inlet flow path 5241 can flow into the piston accommodation part 5610 through the cap through-hole 5623. The piston accommodation part 5610 has an elliptical shape so that a flow path space S can be secured between the piston accommodation part and the seat part 5631. In addition, when the piston 563 is moved upward, water flows through the case passage 5615 through the flow path space S and into the inlet accommodation part. In addition, water flowing into the inlet accommodation part 5616 can be supplied into the filter 60 through the water inlet flow path 6631 of the water inlet part 663 inserted into the inlet accommodation part 5616. Accordingly, water flowing into the water inlet pipe 103 can flow into the interior of the filter 60 through the inlet flow path 5241 of the head 50, the valve 56, and the water inlet flow path 6631.

In addition, the flow path flowing into the interior of the filter 60 can be guided to the outside of the filter member 63 through the first space 6610. In addition, the water outside the filter member 63 passes through the filter member 63 and moves to the hollow space of the filter member 63. In this case, the water can be purified in the process of passing through the filter member 63. The purified water can flow upward through the hollow 631 toward the second space 6651 and be discharged through the water outlet part 664.

The upper end of the water outlet part 664 may be positioned further upward past the outlet ring 542. Accordingly, purified water from the filter 60 may flow through the water outlet part 664 to the outlet flow path 5251 and be discharged to the outside through the water outlet pipe 104.

While water flows through the filter 60, the circumference of the water inlet part 663 and the water outlet part 664 is sealed by the inlet ring 541 and the outlet ring 542 to prevent water leakage. To this end, the height H1 of the water inlet part 663 and the water outlet part 664 based on the upper surface of the filter cover 66 may be formed to be higher than the height H2 of the inlet ring 541 and the outlet ring 542.

For example, the height H2 of the inlet ring 541 and the outlet ring 542 may be positioned at a position slightly higher than the midpoint of the vertical height H1 of the water inlet part 663 and the water outlet part 664. In addition, the inlet ring 541 and the outlet ring 542 may be positioned at a position spaced apart from the upper ends of the water inlet part 663 and the water outlet part 664 by a set distance.

In addition, at least a part of the circumference of the water inlet part 663 and the water outlet part 664 passing through the inlet ring 541 and the outlet ring 542 may be formed to have an elliptical cross-section corresponding to the water inlet part 663 and the water outlet part 664. Accordingly, the water inlet part 663 and the water outlet part 664 can be sealed to prevent leakage and ensure water flow within the head 50.

The filter 60 can be separated from the head 50 after purifying water for a set period of time or a set flow rate, and then replaced with a new filter 60. In order to separate the filter 60 from the head 50, the housing 600 is rotated and moved downward in the reverse order of the above-described process.

At this time, the water inlet part 663 and the water outlet part 664 can be moved downward by the reverse rotation of the filter 60 and can exit the inlet hole 5321 and the outlet hole 5323. In addition, the valve 56 can be closed again by the downward movement and separation of the water inlet part 663, and water flowing into through the water inlet pipe 103 is prevented from leaking out of the head 50.

In particular, even if the filter 60 is not completely separated, when the upper end of the sensing member 668 moves away from the sensing part 552 and goes beyond the detectable gap G2, the water supply valve 102 closes. Therefore, by closing the water supply valve 102 during the initial operation to separate the filter 60, it is possible to fundamentally prevent water leakage from occurring during the process of separating the filter 60.

Below, a method for controlling the home appliance according to whether the filter is recognized is described in detail with reference to the drawings.

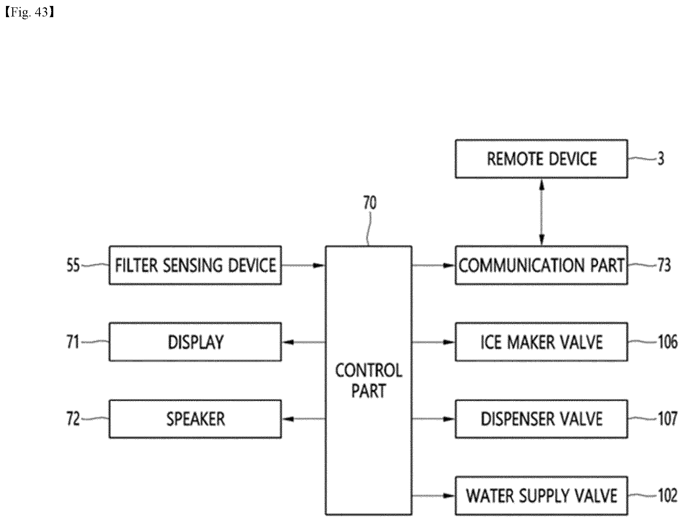

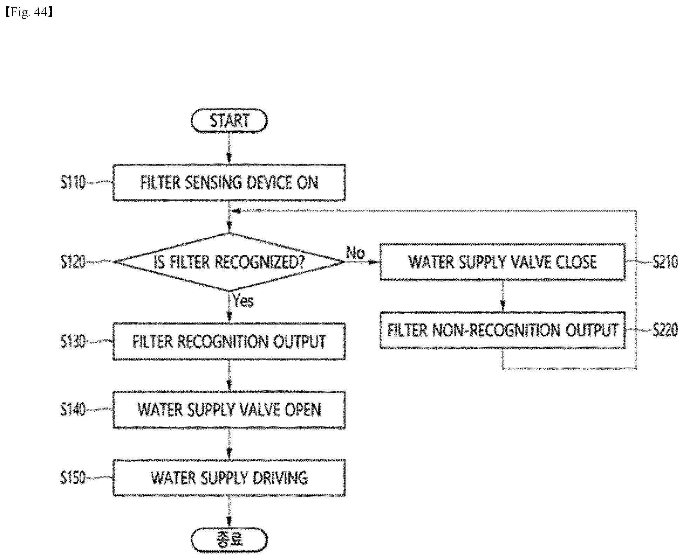

FIG. 43 is a block diagram illustrating the control signal flow of a home appliance according to an embodiment of the present disclosure, and FIG. 44 is a flowchart illustrating a control method according to whether the filter of the home appliance is recognized.

As described above, the home appliance according to the embodiment of the present disclosure can recognize the mounting of the filter 60. At this time, the filter sensing device 55 can sense whether the filter 60 is mounted in the head 50. In addition, the filter sensing device 55 can determine whether an authenticated filter 60 equipped with the filter sensing device 55, that is, whether a genuine filter 60 is installed in the head 50. In addition, if the sensing member 668 is not installed or an unauthenticated filter that is not installed in a designated position is mounted, the control part 70 can determine that the filter 60 is not detected and guide the user accordingly. Accordingly, the user can be guided to use the authenticated filter 60, and performance degradation or problems caused by the use of an unauthenticated filter can be prevented.

In detail, the home appliance may include a control part 70 that controls the overall driving and operation of the home appliance. In addition, the control part 70 may be connected to the filter sensing device 55 to determine whether the certified filter 60 is mounted.

In addition, the control part 70 is connected to the display 71 and can output whether the filter 60 is mounted through the display 71. At this time, the display 71 can output whether the filter 60 is mounted as well as whether the water device is operable or not. For example, the display 71 can be provided on the cabinet 10 or door 20 of the refrigerator 1.

In addition, the control part 70 is connected to a speaker 72 and can output voice or sound to indicate whether the filter 60 is mounted through the speaker 72. At this time, the speaker 72 can output whether the water device is operable as well as whether the filter 60 is mounted.

In addition, the control part 70 can be connected to the communication part 73 to transmit whether the filter 60 is mounted to a remote device 3. For example, the remote device 3 can be a mobile phone or other home appliance capable of screen output or voice output. The remote device 3 can output whether the filter 60 is mounted as well as whether the water device is operable.

In addition, the control part 70 is connected to the water supply valve 102 and can control the operation of the water supply valve 102 according to whether the filter is recognized. In addition, the control part 70 is connected to the dispenser valve 107 connected to the dispenser 23 and the ice maker valve 106 connected to the ice maker 121 and can control the operation of the dispenser valve 107 and the ice maker valve 106.

In detail, the home appliance can be turned on and put into a detectable state when the filter detection device (55) is turned on while the power is supplied.. Then, the filter sensing device 55 can transmit a detection signal of the filter 60 to the control part 70. [S100]

The filter 60 may be mounted when the home appliance is first installed or when the filter replacement cycle is reached. At this time, the filter 60 may be mounted as a different type of filter or an uncertified filter.

In other words, if a filter is mounted on the head 50, but is an uncertified filter, the sensing member 668 is not provided, so the filter sensing device 55 cannot detect the filter despite the mounting of the filter.

When the certified filter 60 is mounted, the sensing member 668 can be detected by the filter sensing device 55. Then, according to whether the certified filter 60 is mounted, the filter sensing device 55 transmits the sensing result to the control part 70, and the control part 70 can determine whether the certified filter 60 is recognized based on this. [S120]

Meanwhile, when the control part 70 recognizes the filter 60, the recognition of the filter 60 can be output.

For example, the control part 70 can output the recognition of the filter 60 to the display 71. Accordingly, the user can check whether the authenticated filter 60 is mounted through the recognition result of the filter 60 displayed through the display 71.

As another example, the control part 70 can output the recognition result of the filter 60 to the speaker 72. Accordingly, the user can check whether the authenticated filter 60 is mounted through the voice or sound output from the speaker 72.

As another example, the control part 70 can transmit the recognition result of the filter 60 to a remote device 3 located away from the home appliance by wireless communication through the communication part 73. Accordingly, the user can check whether the authenticated filter 60 is mounted through the remote device 3. [S130]

In addition, the control part 70 can open the water supply valve 102 when the filter 60 is recognized. Accordingly, purified water can be smoothly supplied when the water device is in operation.

Of course, if the water supply valve 102 is omitted, the dispenser valve 107 or the ice maker valve 106 may be opened depending on the driving conditions of the water device. In addition, the water supply valve 102 and the dispenser valve 107 or the ice maker valve 106 may be opened together. [S140]

In this state, when a user manipulates the water device or driving of the water device is initiated, water can be supplied to the water device. [S150]

Meanwhile, the control part 70 can close the water supply valve 102 if the filter 60 is not recognized. Accordingly, in a situation where an unauthorized filter is mounted or a filter is not mounted, the water supply valve 102 can be closed to stop the use of the water device on the water supply flow path.

In other words, it is possible to prevent problems such as performance degradation or improper water purification due to the use of uncertified filters. In addition, it is possible to prevent the possibility of water leakage through the water device during the replacement process of the filter 60. [S210]

In addition, the control part 70 can output non-recognition of the filter 60 to make the user aware of the use of an unauthorized filter 60. In addition, it can also output that the home appliance is in a state where normal use is not possible to induce the use of an authorized filter 60.

For example, the control part 70 can output the non-recognition of the filter 60 to the display 71. Accordingly, the user can know through the display 71 that the normal recognition of the filter 60 is not performed, and can know the possibility of abnormal operation of the water device.

As another example, the control part 70 can output the non-recognition of the filter 60 to the speaker 72. Accordingly, the user can know that the normal recognition of the filter 60 is not performed through the voice or sound output from the speaker 72, and can know the possibility of abnormal operation of the water device.

As another example, the control part 70 can wirelessly transmit the non-recognition of the filter 60 to the remote device 3 located away from the home appliance through the communication part 73. Accordingly, the user can know that the normal recognition of the filter 60 is not performed through the remote device 3, and can know the possibility of abnormal operation of the water device.

A water filter and a home appliance having the same according to an embodiment of the present disclosure have the following effects.

The filter is equipped with a sensing member so that the mounting of the filter can be recognized by the filter sensing device. Therefore, when a filter other than an authorized filter is used, the mounting of the filter is not recognized by the filter sensing device, which has the advantage of preventing performance degradation due to the use of an unauthorized filter.

In addition, the filter sensing device can selectively open and close the water supply valve of the water supply flow path by detecting the sensing member of the filter. Therefore, there is an advantage in that water supply is blocked when the filter sensing device does not detect the filter, thereby preventing water leakage or damage to the home appliance caused by it.

In addition, since whether mounting a filter can be detected by the filter sensing device when the filter is attached or detached without any additional manipulation, convenience of use can be improved.

In addition, in a state where the mounting of the filter is completed by the sensing member, the mounting of the filter is sensed, and when the separation of the filter starts, the separation of the filter can be sensed. Therefore, there is an advantage in that water leakage can be fundamentally prevented during the inserting or separating process of the water inlet part and the water outlet part during the attaching or detaching process of the filter.

In addition, the filter sensing device can be inserted from the bottom of the head body and supported from the bottom by the head inner coupled with the head body. In other words, a configuration such as an additional fastening member for mounting the filter sensing device becomes unnecessary, and the filter sensing device can be stably fixed only by assembling the head inner. Accordingly, there is an advantage in that the assembly workability is improved and the filter sensing device can be easily replaced or repaired when a problem occurs.

In addition, the filter sensing device is provided inside the sensing hole of the head and can sense the sensing member of the filter in a non-contact manner. Therefore, during the attaching or detaching process of the filter, no direct or indirect impact is transmitted to the filter sensing device, so that malfunction due to damage to the filter sensing device or displacement of the filter sensing device is prevented, thereby ensuring reliable operation.

It will be understood that when an element or layer is referred to as being "on" another element or layer, the element or layer can be directly on another element or layer or intervening elements or layers. In contrast, when an element is referred to as being "directly on" another element or layer, there are no intervening elements or layers present. As used herein, the term "and/or" includes any and all combinations of one or more of the associated listed items.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section could be termed a second element, component, region, layer or section without departing from the teachings of the present disclosure.

Spatially relative terms, such as "lower", "upper" and the like, may be used herein for ease of description to describe the relationship of one element or feature to another element(s) or feature(s) as illustrated in the figures. It will be understood that the spatially relative terms are intended to encompass different orientations of the device in use or operation, in addition to the orientation depicted in the figures. For example, if the device in the figures is turned over, elements described as "lower" relative to other elements or features would then be oriented "upper" relative to the other elements or features. Thus, the exemplary term "lower" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Embodiments of the disclosure are described herein with reference to cross-section illustrations that are schematic illustrations of idealized embodiments (and intermediate structures) of the disclosure. As such, variations from the shapes of the illustrations as a result, for example, of manufacturing techniques and/or tolerances, are to be expected. Thus, embodiments of the disclosure should not be construed as limited to the particular shapes of regions illustrated herein but are to include deviations in shapes that result, for example, from manufacturing.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Any reference in this specification to "one embodiment," "an embodiment," "example embodiment," etc., means that a particular feature, structure, or characteristic described in connection with the embodiment is included in at least one embodiment of the disclosure. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A water filter (60) configured to be coupled to a head (50) for receiving water from a water source, comprising:
a housing (600) having an upper opening (6270);
a filter cover (66) covering the upper opening (6270);
a filter member (63) configured to filter water and provided between the housing (600) and the filter cover (66), and
a seal ring (67) which seals the space between the housing (600) and the filter cover (66),
wherein the filter cover (66) includes:
a water inlet part (663) into which water flows,
a water outlet part (664) from which water is discharged, and
a sensing member (668) protruding upward for alignment with a filter sensing device (55) provided in the head (50), and
wherein at least a part of the housing (600) around the upper opening (6270) is rotatable relative to the filter cover (66), and
wherein, when the part of the housing (600) is rotated for coupling to the head (50), the water inlet part (663), the water outlet part (664), and the sensing member (668) move linearly upward for coupling inside the head (50).

2. The water filter of claim 1,
wherein the sensing member (668) approaches a filter sensing device (55) of the head (50) as the part of the housing is rotated.

3. The water filter of claim 1 or 2,
wherein the water inlet part (663) and the water outlet part (664) of the filter cover (66) protrude in the same direction as the sensing member (668).

4. The water filter of any one of claims 1 to 3,
wherein at least a part of the sensing member (668) is formed of a magnet, and the magnet is disposed on the upper surface of the sensing member (668).

5. The water filter of any one of claims 1 to 4,
wherein the water inlet part (663) and the water outlet part (664) are spaced apart in a first direction, and
wherein the sensing member (668) is spaced apart from the water inlet part (663) and the water outlet part (664) in a second direction different from the first direction.

6. The water filter of any one of claims 1 to 5,
wherein a sensing hole (5327) into which a sensing member 668 to be described below is inserted is formed at the head (50), and when the filter (60) is mounted on the head (50), the sensing member (668) is inserted into the sensing hole (5237), and
the filter sensing device (55) is provided at the sensing hole (5327).

7. The water filter of any one of claims 1 to 6,
wherein the sensing member (668) is formed of a magnetic material, and is mounted on the filter cover (66) to form the same plane as the upper surface of the filter cover (66).

8. The water filter of any one of claims 5 to 7,
wherein the sensing member (668) is disposed between the water inlet part (663) and the water outlet part (664) and spaced apart therefrom in a second direction.

9. The water filter of claim 8,
wherein the filter cover (66) further includes a rotation protrusion protruding upwardly and spaced apart from the sensing member (668) in the second direction.

10. The water filter of claim 9,
wherein first and second guide protrusions (625,626) for attaching or detaching the water filter (60) are formed on the outer surface of the at least the part of the housing (600), and are opposite from each other.

11. The water filter of claim 10,
wherein the water inlet part (663) and the water outlet part (664) are disposed between the first and second guide protrusions (625,626), and the first and second guide protrusions (625,626) are spaced apart in the first direction.

12. The water filter of claim 10 or 11,
wherein the first and second guide protrusions (625,626) are positioned on a first extension line along the first direction as the water inlet part (663) and the water outlet part (664) before the water filter (60) is mounted and are positioned on a second extension line along the second direction as the rotation protrusion (669) and the sensing member (668) when the at least part of the housing (600) is rotated and the water filter (60) is mounted.

13. The water filter of any one of claims 10 to 12,
wherein the water inlet part (663), the water outlet part (664), the rotation protrusion (669) and the sensing member (668) are formed lower than an upper end of the housing (600).

14. The water filter of any one of claims 10 to 13,
wherein the water inlet part (663) and the water outlet part (664) are spaced apart in the first direction based on the center of the filter cover (66) between the pair of guide protrusions (625,626), and
wherein the rotation protrusion (669) and the sensing member (668) are spaced apart in the second direction based on the center of the filter cover (66).

15. The water filter of any one of claims 1 to 14,
wherein the water inlet part (663) and the water outlet part (664) have an elliptical cross-sectional shape, and a major axis of the water inlet part (663) and a major axis of the water outlet part (664) are disposed in a staggered direction to each other.
